# EUROPEAN PATENT APPLICATION

(11) **EP 4 839 005 A1**
(43) Date of publication of application: **11.11.2026**
(21) Application number: 24923580.5
(22) Date of filing: 26.12.2024
(51) Int. Cl.: H04W 76/28

(54) **COMMUNICATION METHOD, TERMINAL DEVICE, AND NETWORK DEVICE**

(30) Priority: 08.02.2024 CN 202410177949
(71) Applicant: Honor Device Co., Ltd., Shenzhen, Guangdong 518040 (CN)
(72) Inventor: SHAN, Baokun, Shenzhen, Guangdong 518040 (CN); PAN, Xiaogang, Shenzhen, Guangdong 518040 (CN)
(74) Representative: Isarpatent
(86) International application number: PCT/CN2024/142884
(87) International publication number: WO 2025/167378

(57) **Abstract**

Embodiments of this application provide a communication method, a terminal device, and a network device, and relate to the field of communication technologies. Therefore, both a UE and a network can accurately and reasonably determine whether to use an LR to monitor a paging message. The method may include: receiving first configuration information, where the first configuration information is used by a terminal device to determine whether to monitor wake-up information WDS, and the wake-up information is used to wake up an MR of the terminal device; and starting, based on the first configuration information, a low power receiver LR to monitor the wake-up information; or starting, based on the first configuration information, the main receiver MR to monitor a paging message.

## Description

This application claims priority to Chinese Patent Application No. 202410177949.2, filed with the China National Intellectual Property Administration on February 8, 2024, and entitled "COMMUNICATION METHOD, TERMINAL DEVICE, AND NETWORK DEVICE", which is incorporated herein by reference in its entirety.

### TECHNICAL FIELD

This application relates to the communication field, and specifically, to a communication method, a terminal device, and a network device.

### BACKGROUND

When a terminal device (for example, a UE) is in an inactive state or an idle state, a network may set up a connection to and communicate with the UE in a paging manner.

Currently, the UE can monitor a paging message through a main receiver (MR) configured therein. Then, after monitoring the paging message, the UE sets up an RRC connection to an access network device, and switches to work in a connected state.

In a process in which the UE monitors the paging message through the MR, because the MR is woken up for long time, high power consumption overheads occur.

### SUMMARY

This application provides a communication method, a terminal device, and a network device, so that both a UE and a network can accurately and reasonably determine whether to use an LR to monitor a paging message.

To achieve the foregoing technical objective, the following technical solutions are used in this application.

According to a first aspect, a communication method is provided. The method is applied to a terminal device. The method includes: receiving first configuration information, where the first configuration information includes first indication information or first time information; the first indication information is used to enable the terminal device to determine whether to monitor wake-up information WUS; the first time information is used by the terminal device to determine whether to monitor the wake-up information; and the wake-up information is used to wake up a main receiver MR of the terminal device; and starting, based on the first configuration information, the LR to monitor the wake-up information; or starting, based on the first configuration information, the MR to monitor a paging message.

In this way, the terminal may autonomously determine, based on the received information (for example, the first indication information or the first time information), whether to start an LP-WUS solution, and monitor the MR through the LR, thereby reducing power consumption of keeping the MR always awake; or not to start an LP-WUS, and directly perform paging monitoring through the MR.

Optionally, the first configuration information includes the first indication information; and the starting, based on the first configuration information, the LR to monitor the wake-up information includes: when MR startup duration is less than a paging cycle, starting the LR to monitor the wake-up information, where the paging cycle is determined based on at least one monitoring cycle configured for the terminal device.

Optionally, the starting, based on the first configuration information, the MR to monitor the paging message includes: when the MR startup duration is greater than the paging cycle, starting the MR to monitor the paging message.

This solution example provides an implementation of the solution when a UE receives the first indication information. In this example, the UE may trigger, based on an enable indication of a network, to determine whether to monitor the WUS, that is, whether to start the LP-WUS solution. In this implementation, the UE may specifically determine, based on startup duration of an MR of the UE and a selected monitoring cycle (for example, the paging cycle), whether to monitor the WUS.

Optionally, the method further includes: determining the paging cycle from the at least one monitoring cycle configured for the terminal device, where the at least one monitoring cycle configured for the terminal device includes at least one of the following: a cell default DRX cycle, a UE-specific DRX cycle, an eDRX cycle in an idle state, and an inactive-state DRX or eDRX cycle.

The cell default DRX cycle and/or the inactive-state DRX or eDRX cycle may be configured by an access network device for the UE. The UE-specific DRX cycle and/or the eDRX cycle in the idle state may be configured by a core network device for the UE.

Optionally, the first configuration information includes the first time information, and the first time information indicates maximum MR startup duration that can be supported by the network when the MR of the terminal device is woken up by using the wake-up information; and the starting, based on the first configuration information, the LR to monitor the wake-up information includes: when MR startup duration is less than the maximum MR startup duration, starting the LR to monitor the wake-up information.

Optionally, the starting, based on the first configuration information, the MR to monitor the paging message includes: when the MR startup duration is greater than the maximum MR startup duration, starting the MR to monitor the paging message.

This solution example provides an implementation of the solution when the UE receives the first time information. In this example, the UE may trigger, based on the enable indication of the network and the received first time information (for example, Tmax), to determine whether to monitor the WUS, that is, whether to start the LP-WUS solution. In this implementation, the UE may specifically determine, based on the startup duration of the MR of the UE and Tmax, whether to monitor the WUS.

Optionally, before the receiving the first configuration information, the method further includes: sending first capability information, where the first capability information includes the MR startup duration.

In this example, the UE may transmit the capability information of the MR startup duration to the network, thereby enabling the network to be informed of the capability information.

Optionally, after the sending the first capability information, the method further includes: receiving first RRC connection release information.

Optionally, the first RRC connection release information includes the first configuration information.

Therefore, a manner in which the UE receives the first configuration information is provided, for example, obtaining the first configuration information by receiving the RRC connection release information delivered by the network.

Optionally, after receiving the first RRC connection release information, the terminal device is in an inactive state Inactive.

Optionally, after the sending the first capability information, the method further includes: receiving a first broadcast message, where the first broadcast message includes the first configuration information. Therefore, another manner in which the UE receives the first configuration information is provided, for example, obtaining the first configuration information by receiving the broadcast message.

Optionally, when receiving the first broadcast message, the terminal device is in an idle state IDEL.

Optionally, the first configuration information further includes: a signal strength condition; and before the starting the LR to monitor the wake-up information, the method further includes: determining that signal strength of a downlink communication channel is greater than a signal strength threshold indicated by the signal strength condition, where the signal strength of the downlink communication channel is obtained through measurement after the terminal device receives the first configuration information.

In this solution, before starting the LR to monitor the WUS, the UE may determine the threshold that meets the signal strength condition.

According to a second aspect, a terminal device is provided. The terminal device is configured to perform the technical solution according to any one of the first aspect and the possible designs of the first aspect.

According to a third aspect, a chip system is provided. The chip system is applied to a terminal device. The chip system may include one or more interface circuits and one or more processors. The interface circuit and the processor are interconnected through a line. The interface circuit is configured to: receive a signal from a memory of the terminal device, and send the signal to the processor. The signal includes a computer instruction stored in the memory. When the processor executes the foregoing computer instruction, the terminal device performs the technical solution according to any one of the first aspect and the possible implementations of the first aspect.

According to a fourth aspect, this application further provides a computer-readable storage medium. The computer-readable storage medium includes a computer instruction. When the computer instruction is run on a terminal device, the terminal device is enabled to perform the technical solution according to any one of the first aspect and the possible implementations of the first aspect.

According to a fifth aspect, this application further provides a computer program product. When the computer program product is run on a computer, the computer is enabled to perform the technical solution according to any one of the first aspect and the possible implementations of the first aspect.

According to a sixth aspect, a communication method is provided. The method is applied to an access network device. The method includes: sending first configuration information, where the first configuration information includes first indication information or first time information; the first indication information is used to enable a terminal device to determine whether to monitor wake-up information WUS; and the first time information is used by the terminal device to determine whether to monitor the wake-up information; and sending the wake-up information, or sending a first paging message.

An implementation of the solution of the second aspect may enable the access network device to cooperate with a UE to implement the first aspect and the possible implementations of the first aspect. Therefore, both a network and the UE can properly select whether to perform an LP-WUS solution to perform UE paging.

Optionally, the first configuration information includes the first indication information; and the sending the wake-up information includes: when MR startup duration is less than a paging cycle, sending the wake-up information, where the paging cycle is determined based on at least one monitoring cycle configured for the terminal device.

Optionally, the sending the first paging message includes: when the MR startup duration is greater than the paging cycle, sending the first paging message.

Optionally, the method further includes: determining the paging cycle from the at least one monitoring cycle configured for the terminal device, where the at least one monitoring cycle configured for the terminal device includes at least one of the following: a cell default DRX cycle, a UE-specific DRX cycle, an eDRX cycle in an idle state, and an inactive-state DRX or eDRX cycle.

Optionally, the first configuration information includes the first time information, and the first time information indicates maximum MR startup duration that can be supported by the network when the MR of the terminal device is woken up by using the wake-up information; and the sending the wake-up information includes: when MR startup duration is less than the maximum MR startup duration, sending the wake-up information.

Optionally, the sending the first paging message includes: when the MR startup duration is greater than the maximum MR startup duration, sending the first paging message.

Optionally, before the first paging message is sent, the wake-up information is not sent.

Optionally, before the sending the wake-up information or the first paging message, the method further includes: receiving first capability information, where the first capability information includes the MR startup duration; sending first RRC connection release information; and receiving a first paging indication from a core network device, where the first paging indication includes the UE-specific DRX cycle and/or the eDRX cycle in the idle state that are/is configured by the core network device for the terminal device.

Optionally, the first RRC connection release information includes the first configuration information.

Optionally, after the receiving the first capability information, the method further includes: sending second capability information to the core network device, where the second capability information includes the MR startup duration.

Optionally, the first paging indication further includes the MR startup duration.

In this example, the access network device may send, to the core network device (for example, an AMF), the MR startup duration reported by the UE, so that when the access network device deletes the capability information of the UE after releasing an RRC connection of the UE, the network can still be informed of the MR startup duration of the UE. For example, when the core network device sends the first paging indication, the access network device may obtain the MR startup duration from the first paging indication.

Optionally, after the sending the first RRC connection release information, the method further includes: sending a first broadcast message, where the first broadcast message includes the first configuration information.

According to a seventh aspect, a network device is provided. The network device is configured to perform the technical solution according to any one of the sixth aspect and the possible designs of the sixth aspect. Optionally, the network device may be an access network device.

According to an eighth aspect, this application further provides a chip system. The chip system is applied to a network device. The chip system may include one or more interface circuits and one or more processors. The interface circuit and the processor are interconnected through a line. The interface circuit is configured to: receive a signal from a memory of the network device, and send the signal to the processor. The signal includes a computer instruction stored in the memory. When the processor executes the foregoing computer instruction, the network device performs the technical solution according to any one of the sixth aspect and the possible implementations of the sixth aspect.

According to a ninth aspect, this application further provides a computer-readable storage medium. The computer-readable storage medium includes a computer instruction. When the computer instruction is run on a network device, the network device is enabled to perform the technical solution according to any one of the sixth aspect and the possible implementations of the sixth aspect.

According to a tenth aspect, this application further provides a computer program product. When the computer program product is run on a computer, the computer is enabled to perform the technical solution according to any one of the sixth aspect and the possible implementations of the sixth aspect.

According to an eleventh aspect, a network device is provided. The network device is configured to perform the technical solution performed by a core network device according to any one of the first aspect and the possible designs of the first aspect or the sixth aspect and the possible designs of the sixth aspect. Optionally, the network device may be a core network device.

It may be understood that the solutions according to the second aspect to the eleventh aspect provided in this application may separately correspond to any one of the first aspect and the possible designs of the first aspect. Therefore, beneficial effect that can be achieved is similar, and details are not described herein again.

According to a twelfth aspect, a communication method is provided. The method is applied to a terminal device. The method includes: receiving first configuration information, where the first configuration information includes second time information; and the second time information is used by the terminal device to determine whether to monitor wake-up information; and starting, based on the first configuration information, an LR to monitor the wake-up information; or starting, based on the first configuration information, an MR to monitor a paging message.

Optionally, the second time information indicates a minimum paging cycle that can be used by the terminal device when the LR is used to monitor the wake-up information.

Optionally, the starting, based on the first configuration information, the LR to monitor the wake-up information includes: when a paging cycle is greater than the minimum paging cycle, starting the LR to monitor wake-up information, where the paging cycle is determined based on at least one monitoring cycle configured for the terminal device.

Optionally, the starting, based on the first configuration information, the MR to monitor the paging message includes: when the paging cycle is less than the minimum paging cycle, starting the MR to monitor the paging message.

This solution provides another implementation of the solution in which the UE determines, based on information configured by the network, whether to use the LR to monitor the wake-up information. In this example, the UE may determine, based on the second time information (for example, Tmin) configured by the network, whether to monitor the wake-up information, or directly monitor the paging message.

Optionally, the method further includes: determining the paging cycle from the at least one monitoring cycle configured for the terminal device, where the at least one monitoring cycle configured for the terminal device includes at least one of the following: a cell default DRX cycle, a UE-specific DRX cycle, an eDRX cycle in an idle state, and an inactive-state DRX or eDRX cycle.

Optionally, the receiving the first configuration information includes: receiving a first broadcast message, where the first broadcast message includes the first configuration information; or receiving first RRC connection release information, where the first RRC connection release information includes the first configuration information. For example, when the UE is IDEL, the UE may obtain the first configuration information by using the first broadcast message. When the UE is inactive, the UE may obtain the first configuration information by using the first RRC connection release information or the first broadcast message. In some other implementations, before entering IDEL, the UE may alternatively obtain the first configuration information by using RRC related information.

Optionally, the first configuration information further includes: a signal strength condition; and before the starting, based on the first configuration information, the LR to monitor the wake-up information, the method further includes: determining that signal strength of a downlink communication channel is greater than a signal strength threshold indicated by the signal strength condition, where the signal strength of the downlink communication channel is obtained through measurement after the terminal device receives the first configuration information.

Similar to the solution example in the first aspect, in this example, the UE may determine that a requirement of the signal strength condition is met before starting the LR.

According to a thirteenth aspect, a terminal device is provided. The terminal device is configured to perform the technical solution according to any one of the twelfth aspect and the possible designs of the twelfth aspect.

According to a fourteenth aspect, a chip system is provided. The chip system is applied to a terminal device. The chip system may include one or more interface circuits and one or more processors. The interface circuit and the processor are interconnected through a line. The interface circuit is configured to: receive a signal from a memory of the terminal device, and send the signal to the processor. The signal includes a computer instruction stored in the memory. When the processor executes the foregoing computer instruction, the terminal device performs the technical solution according to any one of the twelfth aspect and the possible implementations of the twelfth aspect.

According to a fifteenth aspect, this application further provides a computer-readable storage medium. The computer-readable storage medium includes a computer instruction. When the computer instruction is run on a terminal device, the terminal device is enabled to perform the technical solution according to any one the twelfth aspect and the possible implementations of the twelfth aspect.

According to a sixteenth aspect, this application further provides a computer program product. When the computer program product is run on a computer, the computer is enabled to perform the technical solution according to any one of the twelfth aspect and the possible implementations of the twelfth aspect.

According to a seventeenth aspect, a communication method is provided. The method is applied to an access network device. The method includes: sending first configuration information, where the first configuration information includes second time information; and the second time information is used by the terminal device to determine whether to monitor wake-up information; and sending the wake-up information, or sending a first paging message.

An implementation of the solution of the seventeenth aspect may enable the access network device to cooperate with a UE to implement the twelfth aspect and the possible implementations of the twelfth aspect. Therefore, both a network and the UE can properly select whether to perform an LP-WUS solution to perform UE paging.

Optionally, the second time information indicates a minimum paging cycle that can be used by the terminal device when an LR is used to monitor the wake-up information.

Optionally, the sending the wake-up information includes: when a paging cycle is greater than the minimum paging cycle, sending the wake-up information, where the paging cycle is determined based on at least one monitoring cycle configured for the terminal device.

Optionally, the sending the first paging message includes: when a paging cycle is less than the minimum paging cycle, sending the wake-up information, where the paging cycle is determined based on at least one monitoring cycle configured for the terminal device.

Optionally, the method further includes: determining the paging cycle from the at least one monitoring cycle configured for the terminal device, where the at least one monitoring cycle configured for the terminal device includes at least one of the following: a cell default DRX cycle, a UE-specific DRX cycle, an eDRX cycle in an idle state, and an inactive-state DRX or eDRX cycle.

Optionally, the sending the first configuration information includes: sending a first broadcast message, where the first broadcast message includes the first configuration information.

Optionally, before the sending the first configuration information, the method further includes: receiving a first paging indication from a core network device, where the first paging indication includes the UE-specific DRX cycle and/or the eDRX cycle in the idle state that are/is configured by the core network device for the terminal device.

According to an eighteenth aspect, a network device is provided. The network device is configured to perform the technical solution according to any one of the twelfth aspect and the possible designs of the twelfth aspect. Optionally, the network device may be an access network device.

According to a nineteenth aspect, this application further provides a chip system. The chip system is applied to a network device. The chip system may include one or more interface circuits and one or more processors. The interface circuit and the processor are interconnected through a line. The interface circuit is configured to: receive a signal from a memory of the network device, and send the signal to the processor. The signal includes a computer instruction stored in the memory. When the processor executes the foregoing computer instruction, the network device performs the technical solution according to any one of the twelfth aspect and the possible implementations of the twelfth aspect.

According to a twentieth aspect, this application further provides a computer-readable storage medium. The computer-readable storage medium includes a computer instruction. When the computer instruction is run on a network device, the network device is enabled to perform the technical solution according to any one of the twelfth aspect and the possible implementations of the twelfth aspect.

According to a twenty-first aspect, this application further provides a computer program product. When the computer program product is run on a computer, the computer is enabled to perform the technical solution according to any one of the twelfth aspect and the possible implementations of the twelfth aspect.

According to a twenty-second aspect, a network device is provided. The network device is configured to perform the technical solution performed by a core network device according to any one of the twelfth aspect and the possible designs of the twelfth aspect or the second aspect and the possible designs of the second aspect. Optionally, the network device may be a core network device.

It may be understood that the solutions according to the thirteenth aspect to the twenty-second aspect provided in this application may separately correspond to any one of the twelfth aspect and the possible designs of the twelfth aspect. Therefore, beneficial effect that can be achieved is similar, and details are not described herein again.

According to a twenty-third aspect, a communication method is provided. The method is applied to a terminal device. The method includes: receiving first configuration information, where the first configuration information includes second indication information or third indication information; the second indication information indicates the terminal device to start an LR to monitor wake-up information WUS; and the third indication information indicates the terminal device to start a main receiver MR; and starting, based on the first configuration information, the LR to monitor the wake-up information; or starting, based on the first configuration information, the MR to monitor a paging message.

In this solution example, a UE may receive indication information sent by a network, and start, based on the indication information, the LR to monitor the WUS, or directly start the MR to perform paging monitoring.

Optionally, the first configuration information includes the second indication information; and the starting, based on the first configuration information, the LR to monitor the wake-up information includes: starting the LR based on the received second indication information.

Optionally, the first configuration information includes the third indication information; and the starting, based on the first configuration information, the MR to monitor the paging message includes: starting the LR based on the received third indication information.

Optionally, the receiving the first configuration information includes: receiving first RRC connection release information, where the first configuration information is carried in the first RRC connection release information.

Optionally, after receiving the first RRC connection release information, the terminal device is in an inactive state inactive or an idle state IDEL.

Optionally, the receiving the first configuration information includes: receiving a first broadcast message, where the first broadcast message includes the first configuration information.

Optionally, when receiving the first broadcast message, the terminal device is in an inactive state inactive or an idle state IDEL.

Optionally, the first configuration information further includes: a signal strength condition; and before the starting the LR to monitor the wake-up information, the method further includes: determining that signal strength of a downlink communication channel is greater than a signal strength threshold indicated by the signal strength condition, where the signal strength of the downlink communication channel is obtained through measurement after the terminal device receives the first configuration information.

According to a twenty-fourth aspect, a terminal device is provided. The terminal device is configured to perform the technical solution according to any one of the twenty-third aspect and the possible designs of the twenty-third aspect.

According to a twenty-fifth aspect, a chip system is provided. The chip system is applied to a terminal device. The chip system may include one or more interface circuits and one or more processors. The interface circuit and the processor are interconnected through a line. The interface circuit is configured to: receive a signal from a memory of the terminal device, and send the signal to the processor. The signal includes a computer instruction stored in the memory. When the processor executes the foregoing computer instruction, the terminal device performs the technical solution according to any one of the twenty-third aspect and the possible implementations of the twenty-third aspect.

According to a twenty-sixth aspect, this application further provides a computer-readable storage medium. The computer-readable storage medium includes a computer instruction. When the computer instruction is run on a terminal device, the terminal device is enabled to perform the technical solution according to any one the twenty-third aspect and the possible implementations of the twenty-third aspect.

According to a twenty-seventh aspect, this application further provides a computer program product. When the computer program product is run on a computer, the computer is enabled to perform the technical solution according to any one of the twenty-third aspect and the possible implementations of the twenty-third aspect.

According to a twenty-eighth aspect, a communication method is provided. The method is applied to an access network device. The method includes: receiving first DRX assistance information, where the first DRX assistance information includes a UE-specific DRX cycle and/or an eDRX cycle in an idle state that have/has been configured by a core network device for a terminal device; and sending first configuration information, where the first configuration information includes second indication information or third indication information; the second indication information indicates the terminal device to monitor wake-up information WUS; and the third indication information indicates the terminal device to not monitor the wake-up information, or the third indication information indicates the terminal device to monitor a paging message.

This example provides a solution example of cooperation with the UE in the twenty-third aspect, so that the access network device can reasonably and accurately determine whether to use an LP-WUS solution to page the UE. The access network device may further synchronize a determining result to the UE in a form of the first configuration information, so that a behavior of the UE and a behavior of the network are consistent.

Optionally, before the sending the first configuration information, the method further includes: determining, based on the first DRX assistance information, that the first configuration information includes the second indication information or the third indication information.

Optionally, the determining, based on the first DRX assistance information, that the first configuration information includes the second indication information or the third indication information includes: determining a paging cycle from at least one monitoring cycle configured for the terminal device, where the at least one monitoring cycle configured for the terminal device includes at least one of the following: a cell default DRX cycle, a UE-specific DRX cycle, an eDRX cycle in an idle state, and an inactive-state DRX or eDRX cycle; and determining, based on the paging cycle, to carry the second indication information or the third indication information in the first configuration information.

Optionally, the first configuration information includes the second indication information, and the method further includes: sending the wake-up information.

Optionally, the first configuration information includes the third indication information, and the method further includes: sending a first paging message.

Optionally, the sending the first configuration information includes: sending first RRC connection release information, where the first configuration information is carried in the first RRC connection release information; or sending the first configuration information by using a broadcast message.

Optionally, the receiving the first DRX assistance information includes: receiving an INITIAL CONTEXT SETUP REQUEST message, where the INITIAL CONTEXT SETUP REQUEST message includes the first DRX assistance information.

According to a twenty-ninth aspect, a network device is provided. The network device is configured to perform the technical solution according to any one of the twenty-eighth aspect and the possible designs of the twenty-eighth aspect. Optionally, the network device may be an access network device.

According to a thirtieth aspect, this application further provides a chip system. The chip system is applied to a network device. The chip system may include one or more interface circuits and one or more processors. The interface circuit and the processor are interconnected through a line. The interface circuit is configured to: receive a signal from a memory of the network device, and send the signal to the processor. The signal includes a computer instruction stored in the memory. When the processor executes the foregoing computer instruction, the network device performs the technical solution according to any one of the twenty-eighth aspect and the possible implementations of the twenty-eighth aspect.

According to a thirty-first aspect, this application further provides a computer-readable storage medium. The computer-readable storage medium includes a computer instruction. When the computer instruction is run on a network device, the network device is enabled to perform the technical solution according to any one of the twenty-eighth aspect and the possible implementations of the twenty-eighth aspect.

According to a thirty-second aspect, this application further provides a computer program product. When the computer program product is run on a computer, the computer is enabled to perform the technical solution according to any one of the twenty-eighth aspect and the possible implementations of the twenty-eighth aspect.

According to a thirty-third aspect, a communication method is provided. The method is applied to a core network device. The method includes: sending first DRX assistance information, where the first DRX assistance information includes a UE-specific DRX cycle and/or an eDRX cycle in an idle state that have/has been configured by the core network device for a terminal device.

Optionally, before the sending the first DRX assistance information, the method further includes: setting up, by the core network device, a communication connection to the terminal device.

Optionally, the first DRX assistance information is used to determine, after the terminal device enters an inactive state inactive, whether to monitor wake-up information WUS.

Optionally, the sending the first DRX assistance information includes: sending the first DRX assistance information in an INITIAL CONTEXT SETUP REQUEST message.

Therefore, a mechanism in the core network device is provided, so that the core network device can cooperate with another network element (for example, an access network device) to implement accurate and reasonable determining of whether to use an LP-WUS solution.

For example, by using the foregoing example, the core network device may cooperate with the access network device to properly determine, based on a selected monitoring cycle (for example, a paging cycle), whether to use the LP-WUS solution.

It may be understood that the solutions according to the twenty-fourth aspect to the thirty-third aspect provided in this application may separately correspond to any one of the twenty-third aspect and the possible designs of the twenty-third aspect. Therefore, beneficial effect that can be achieved is similar, and details are not described herein again.

According to a thirty-fourth aspect, a communication method is provided. The method is applied to an access network device. The method includes: receiving second DRX assistance information, where the second DRX assistance information includes a first monitoring cycle; and the first monitoring cycle includes at least one of the following: a minimum value of a UE-specific DRX cycle and an eDRX cycle in an idle state that can be supported by a core network device; and a minimum value of a UE-specific DRX cycle and/or an eDRX cycle in an idle state that have/has been configured by the core network device for a terminal device; and sending first configuration information, where the first configuration information includes second indication information or third indication information; the second indication information indicates the terminal device to monitor wake-up information WUS; and the third indication information indicates the terminal device to not monitor the wake-up information, or the third indication information indicates the terminal device to monitor a paging message.

Optionally, before the sending the first configuration information, the method further includes: determining, based on the first monitoring cycle included in the second DRX assistance information, that the first configuration information includes the second indication information or the third indication information.

Optionally, the first configuration information includes the second indication information, and the method further includes: sending the wake-up information.

Optionally, the first configuration information includes the third indication information, and the method further includes: sending a first paging message.

Optionally, the sending the first configuration information includes: sending first RRC connection release information, where the first configuration information is carried in the first RRC connection release information; or sending the first configuration information by using a broadcast message.

Optionally, the receiving the second DRX assistance information includes: receiving an AMF CONFIGURATION UPDATE message, where the AMF CONFIGURATION UPDATE message includes the second DRX assistance information.

According to a thirty-fifth aspect, a network device is provided. The network device is configured to perform the technical solution according to any one of the thirty-fourth aspect and the possible designs of the thirty-fourth aspect. Optionally, the network device may be an access network device.

According to a thirty-sixth aspect, this application further provides a chip system. The chip system is applied to a network device. The chip system may include one or more interface circuits and one or more processors. The interface circuit and the processor are interconnected through a line. The interface circuit is configured to: receive a signal from a memory of the network device, and send the signal to the processor. The signal includes a computer instruction stored in the memory. When the processor executes the foregoing computer instruction, the network device performs the technical solution according to any one of the thirty-fourth aspect and the possible implementations of the thirty-fourth aspect.

According to a thirty-seventh aspect, this application further provides a computer-readable storage medium. The computer-readable storage medium includes a computer instruction. When the computer instruction is run on a network device, the network device is enabled to perform the technical solution according to any one of the thirty-fourth aspect and the possible implementations of the thirty-fourth aspect.

According to a thirty-eighth aspect, this application further provides a computer program product. When the computer program product is run on a computer, the computer is enabled to perform the technical solution according to any one of the thirty-fourth aspect and the possible implementations of the thirty-fourth aspect.

According to a thirty-ninth aspect, a communication method is provided. The method is applied to a core network device. The method includes: sending second DRX assistance information, where the second DRX assistance information includes a first monitoring cycle; and the first monitoring cycle includes at least one of the following: a minimum value of a UE-specific DRX cycle and an eDRX cycle in an idle state that can be supported by a core network device; and a minimum value of a UE-specific DRX cycle and/or an eDRX cycle in an idle state that have/has been configured by the core network device for a terminal device.

Optionally, before the sending the second DRX assistance information, the method further includes: setting up, by the core network device, a communication connection to the terminal device.

Optionally, the second DRX assistance information is used to determine, after the terminal device enters an inactive state inactive or an idle state IDEL, whether to monitor wake-up information WUS.

Optionally, the sending the second DRX assistance information includes: sending the second DRX assistance information in an AMF CONFIGURATION UPDATE message.

Therefore, another mechanism in the core network device is provided, so that the core network device can cooperate with another network element (for example, an access network device) to implement accurate and reasonable determining of whether to use an LP-WUS solution.

For example, by using the foregoing example, the core network device may cooperate with the access network device, and properly determine, based on the monitoring cycle that has been configured by the network for the UE (including but not limited to a monitoring cycle configured by the access network device for the UE, and/or a monitoring cycle configured by the core network device for the UE), whether to use the LP-WUS solution.

### BRIEF DESCRIPTION OF DRAWINGS

FIG. 1 is a diagram of a communication scenario according to an embodiment of this application;
FIG. 2 is a diagram of an interaction procedure for a monitoring cycle configuration according to an embodiment of this application;
FIG. 3 is a diagram of an interaction procedure for paging a UE according to an embodiment of this application;
FIG. 4 is a diagram of time sequence comparison according to an embodiment of this application;
FIG. 5 is a diagram of an interaction procedure for capability information reporting according to an embodiment of this application;
FIG. 6A and FIG. 6B are a diagram of an interaction procedure for paging a UE according to an embodiment of this application;
FIG. 7A and FIG. 7B are a diagram of an interaction procedure for paging a UE according to an embodiment of this application;
FIG. 8 is a diagram of an interaction procedure for capability information reporting according to an embodiment of this application;
FIG. 9A and FIG. 9B are a diagram of an interaction procedure for paging a UE according to an embodiment of this application;
FIG. 10 is a diagram of an interaction procedure for paging a UE according to an embodiment of this application;
FIG. 11 is a diagram of an interaction procedure for paging a UE according to an embodiment of this application;
FIG. 12 is a diagram of an interaction procedure for paging a UE according to an embodiment of this application;
FIG. 13 is a diagram of an interaction procedure for paging a UE according to an embodiment of this application;
FIG. 14 is a diagram of working logic of a terminal device according to an embodiment of this application;
FIG. 15 is a composition diagram of a terminal device according to an embodiment of this application; and
FIG. 16 is a composition diagram of a chip system according to an embodiment of this application.

### DESCRIPTION OF EMBODIMENTS

The following terms "first" and "second" are used merely for the purpose of description, and shall not be construed as indicating or implying relative importance or implying a quantity of indicated technical features. Therefore, a feature defined with "first" or "second" may explicitly or implicitly include one or more of such features. In descriptions of embodiments, unless otherwise stated, "a plurality of" means two or more.

First, some terms used in embodiments of this application are explained.
(1) Terminal device (terminal): may also be referred to as a user equipment (User Equipment, UE), a user terminal, a mobile station (Mobile Station, MS), a mobile terminal (Mobile Terminal, MT), or the like. The terminal device may be a mobile phone, a wearable device (for example, a smartwatch), or the like. The terminal device may be a terminal for short.

In some embodiments of this application, an application processor (Application Processor, AP) and a modem (Modem, also referred to as baseband processor, MD for short) may be configured in the terminal device.

The AP can support an interface display capability of the terminal device. The AP can further execute a corresponding response based on a user operation received by the terminal device on an interface. In addition, the MD can support a digital processing capability of the terminal device.

In some embodiments, a main receiver (Main receiver, MR) may be configured in the terminal. Working states of the MR include a wake-up state and a sleep state. When the MR is in the wake-up state, the terminal may support receiving of a radio signal (for example, a paging message). Correspondingly, when the MR is in the sleep state, if the terminal needs to receive a radio signal, the terminal first needs to change the state of the MR from the sleep state to the wake-up state.

In some other embodiments, a low power receiver (Low power receiver, LR) may be further configured in the terminal. The LR is configured to detect a wake-up (wake-up) signal for the MR at low power consumption. After the LR receives the wake-up signal, the terminal may start to change the state of the MR from the sleep state to the wake-up state. The wake-up signal may also be referred to as a WUS.

(2) LTE: may be understood as a radio access network for a 4G network. In the LTE network (commonly referred to as the 4G network), because of an evolution relationship, an access network part is referred to as an evolved UMTS terrestrial radio access network (Evolved UMTS Terrestrial Radio Access Network, E-UTRAN). In this application, LTE has a same meaning as E-UTRAN, both meaning the access network part of the 4G network. The terminal device may access the LTE through a 4G base station (for example, an eNB).

(3) NR: may be understood as a radio access network for a 5G network. In the 5G network, an access network part is referred to as a next generation radio access network (Next Generation Radio Access Network, NG-RAN or NG RAN). In this application, the NR and the NG-RAN (or referred to as the NG RAN) have a same meaning, both meaning the access network part of the 5G network. The terminal device may access the LTE through a 5G base station (for example, a gNB). In this application, the 5G network may also be referred to as an NR network.

It may be understood that the LTE and the NR are both access networks. The access network is responsible for using a wired or wireless connection and communication technology to progressively connect a large quantity of end users (End Users) to a core network (also referred to as a backbone network), implementing a connection to the network. The access network is an edge part of the entire network and a part closest to the user, and is usually referred to as "the last mile".

In embodiments of this application, an access network device in an access network (for example, an eNB in a 5G network or a gNB in a 4G network) may correspond to one or more cells (cells). Each cell correspondingly covers a part of a coverage area of the access network device. A set of coverage areas of one or more cells of one access network device may form a complete coverage area of the access network device.

(4) Core network: Main functions are to provide user connections, manage users, bear services, and serve as a bearer network to provide an interface to an external network. Setup of the user connections includes functions such as mobility management (MM), call management (CM), switching/routing, and recording notification (completing a relationship of connecting to a peripheral device of an intelligent network by combining a service of the intelligent network).

It may be understood that a core network of the 4G network is an evolved packet core (Evolved Packet Core, EPC) network. The EPC network is a core network of a 4G mobile communication network. The EPC network belongs to a core network, has conventional capabilities of a mobile network, such as user subscription data storage, mobility management, and data exchange, and can provide ultra-high-speed Internet access experience for users. A core network of the 5G network is a 5G core (5GC for short). The 5GC replaces a dedicated communication device in the 4G network with a general-purpose network function virtualization device.

It should be noted that in some embodiments, the core network may be obtained by combining the EPC and the 5GC. In other words, the core network may include both a network element in the EPC and a network element in the 5GC. For example, the core network may include an access and mobility management function (Access and Mobility Management Function, AMF) network element, a mobility management entity (Mobility Management Entity, MME) network element, a serving gateway (Serving GateWay, SGW) network element, a packet data network gateway (Packet Data Network GateWay, PGW) network element, a session management function (Session Management Function, SMF) network element, a user plane function (User Plane Function, UPF) network element, a unified data management (Unified Data Management, UDM) network element, a home subscriber server (Home Subscriber Server, HSS) network element, and the like.

In some embodiments of this application, the core network may include a converged network element obtained from the network element in the EPC and the network element in the 5GC, for example, SMF+PGW-C, UPF+PGW-U, and UDM+HSS. A PGW-C is a control plane node of the PGW network element, and a PGW-U is a user plane node of the PGW network element.

(5) State of the terminal: An example in which the terminal performs communication in the 5G network is used. The terminal may also be referred to as an NR UE. Radio resource control (Radio Resource Control, RRC) states of the NR UE may include: an idle mode (IDLE mode), a connected mode (Connected mode), and an inactive mode (Inactive mode).

When the RRC state of the terminal is the idle mode, it may also mean that the terminal is in an idle state. When the RRC state of the terminal is the connected mode, it may also mean that the terminal is in a connected state. When the RRC state of the terminal is the inactive mode, it may also mean that the terminal is in an inactive state.

When the terminal is in the idle state, RRC connections to all access network devices are disconnected. When the terminal is in the connected state, the terminal sets up an RRC connection to at least one access network device, and the terminal can communicate and interact with the core network through the access network device. When the terminal is in the inactive state, the RRC connection between the terminal and the access network device is in a suspended (suspend) state. If the terminal needs to communicate with the access network device, the RRC connection needs to be resumed to the connected state.

When the terminal is in the idle state or the inactive state, the MR in the terminal may be in a sleep state. When the LR is configured in the terminal, and the terminal is in the idle state or the inactive state, the LR may be in a wake-up state, to monitor wake-up information for the MR; or when the terminal is in the idle state or the inactive state, the LR may enter the wake-up state at a corresponding moment based on a configuration in the terminal or a configuration of the network, to monitor the wake-up information for the MR.

(6) Paging (Paging): When the terminal is in the idle state or the inactive state, the terminal may monitor, based on a configured monitoring cycle, a paging message (paging message) at a paging occasion (Paging occasion, PO), to receive a downlink triggered service. The network may configure the monitoring cycle for the terminal by using a DRX configuration or an eDRX configuration.

An example in which the terminal is in the idle state or the inactive state is used.

In some embodiments, before the PO arrives, the terminal may start the MR, so that when the PO arrives, the terminal can monitor the paging message through the MR.

When the LR is configured in the terminal, before the PO arrives, the terminal may start the MR based on the WUS received by the LR.

In some other embodiments, when the PO arrives, the MR may not have been started or may not have been completely started. In this way, after the MR has been completely started (where the working state is switched to the wake-up state), the terminal may monitor the paging message through the MR.

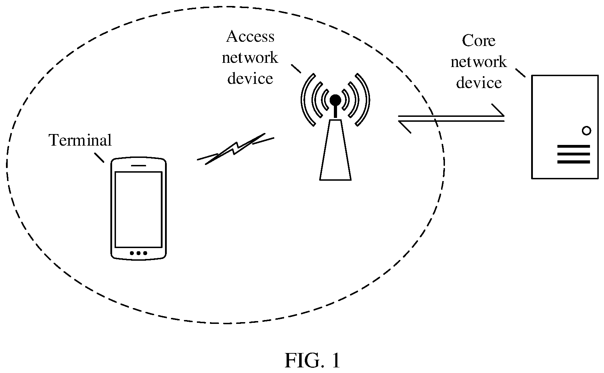

In an example, FIG. 1 is a diagram of a communication architecture according to an embodiment of this application.

In the example shown in FIG. 1, in a communication process, a terminal may set up an RRC connection to an access network device. The access network device may set up a communication connection to a core network device. In this way, when performing an uplink service, the terminal may transmit to-be-sent information to the access network device through the RRC connection, so that the access network transmits the information to a corresponding core network device. Correspondingly, when the terminal performs a downlink service, the core network device may send downlink service data to the access network device. The access network device may transmit related data and information to the terminal through the RRC connection based on the downlink service data.

An example in which the terminal currently accesses a 5G network is used. A corresponding access network device may include a 5G base station (eNB). A core network device may include various core network devices corresponding to the 5G network, for example, an AMF or an MME in the 5G network.

An example in which the terminal currently accesses a 4G network is used. A corresponding access network device may include a 4G base station (gNB). A core network device may include various core network devices corresponding to the 4G network, for example, an AMF or an MME in the 4G network.

Each network element in the core network may also be referred to as a functional entity, and may be a network element implemented on dedicated hardware, or a software instance running on the dedicated hardware, or a virtualized function instance on an appropriate platform.

It should be understood that names of all network elements in this application are merely examples. In future communication, for example, 6G, the network element may have another name, or in future communication, for example, 6G, the network element in this application may alternatively be replaced with another entity, device, or the like having a same function. This is not limited in this application. This is uniformly described herein, and details are not described below again. Optionally, various network elements in embodiments of this application may be communication devices, or chips, chip systems, or the like that may operate in the communication device. This is not limited in embodiments of this application.

It may be understood that the core network in the network architecture shown in FIG. 1 may further include another device, network element, network entity, or network subsystem, for example, a policy control function (Policy Control function, PCF) network element. This is not limited in this application. It should be noted that this application does not limit a distribution manner of the network elements in the core network. For details of the distribution manner, refer to related technical documents. This is not elaborated in this application.

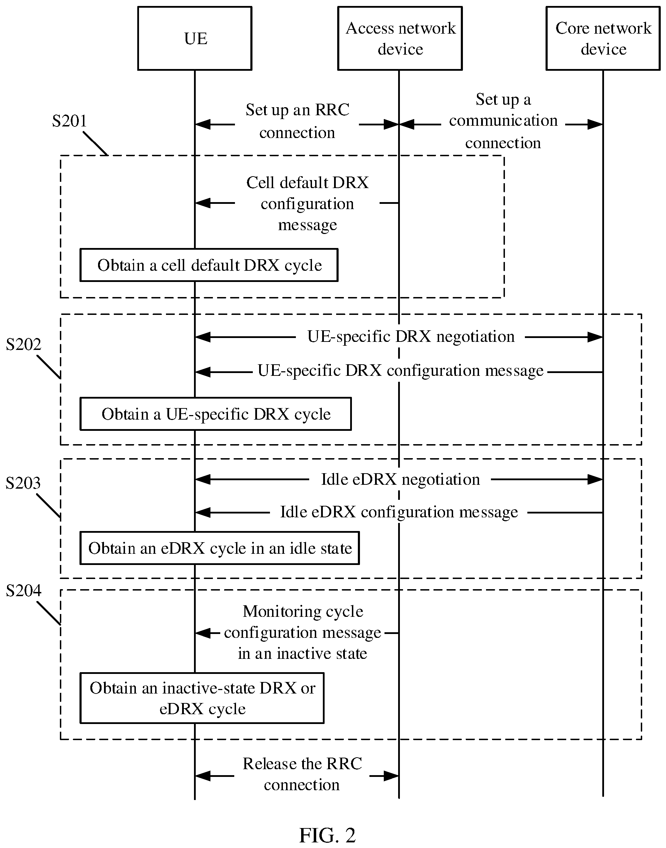

FIG. 2 is a diagram of logical interaction in which a network configures a monitoring cycle for a UE after the UE sets up a communication connection to the network.

As shown in FIG. 2, in this example, the UE may set up an RRC connection to an access network device (for example, an eNB). The access network device may further set up a communication connection to a core network device (for example, a 5GC).

In this way, the UE may communicate and interact with the core network device through the RRC connection to the access network device.

In some embodiments, as shown in S201 in FIG. 2, the access network device may send a cell default DRX configuration message to the UE. The cell default DRX configuration message may carry information about a cell default DRX cycle (cell default DRX cycle) corresponding to a cell accessed by the UE.

Therefore, the UE may obtain the cell default DRX cycle. In some implementations, the cell default DRX cycle may be configured in a range of 320 ms to 2.56s.

In some other embodiments, as shown in S202 in FIG. 2, the core network device may perform UE-specific DRX negotiation with the UE through the access network device. Therefore, the core network device may send a UE-specific DRX configuration message to the UE through the access network device. The UE-specific DRX configuration message may carry information about a UE-specific DRX cycle (UE-specific DRX cycle).

Therefore, the UE may obtain the UE-specific DRX cycle. In some implementations, the UE-specific DRX cycle may be configured in a range of 2.56s to 2.91h.

In some other embodiments, as shown in S203 in FIG. 2, the core network device may perform idle eDRX negotiation with the UE through the access network device. Therefore, the core network device may send an idle eDRX configuration message to the UE through the access network device. The idle eDRX configuration message may carry information about an eDRX cycle (IDEL eDRX cycle) in an idle state.

Therefore, the UE may obtain the eDRX cycle in the idle state. In some implementations, the eDRX cycle in the idle state may be configured in a range of 320 ms to 2.56s.

In some other embodiments, as shown in S204 in FIG. 2, the access network device may send an inactive-state monitoring cycle configuration message to the UE. The inactive-state monitoring cycle configuration message may carry information about an inactive-state DRX or eDRX cycle (Cell default (e)DRX cycle) configured by the access network device for the UE.

Therefore, the UE may obtain the inactive-state DRX or eDRX cycle. In some implementations, the inactive-state DRX or eDRX cycle may be configured in a range of 320 ms to 10.24s.

In some implementations, S204 may be performed before the UE disconnects the RRC connection with the access network device of the currently accessed cell. Therefore, the network may configure, through S204, an appropriate monitoring cycle for the UE that is about to enter the inactive state.

Therefore, as shown in FIG. 2, after S204 is completed, the UE may release (release) the RRC connection to the access network device, and then enter the inactive state or the idle state.

It should be noted that in FIG. 2, at least four manners in which the network configures the monitoring cycle for the UE are provided. During specific implementation, the network may configure one or more monitoring cycles for the UE through one or more of S201 to S204 in FIG. 2.

For example, the network may separately configure the foregoing four monitoring cycles for the UE through S201 to S204. Therefore, the four configured monitoring cycles may be separately stored in the UE.

As stipulated in an existing protocol, when actually monitoring a paging message, the UE may select one of the four stored monitoring cycles based on an actual situation, and perform MR wake-up and paging message monitoring based on the selected monitoring cycle. In the following examples, the selected monitoring cycle may also be referred to as a paging cycle for monitoring paging, or a paging cycle for short.

For example, according to protocol content in 38.204, the UE may select a monitoring cycle with shortest duration (the shortest) in all configured monitoring cycles as the paging cycle.

For another example, the UE may determine the paging cycle according to a configured policy.

In view of this, the UE may monitor the paging message through the started MR based on the monitoring cycle when a PO arrives; or after a PO arrives, wait for the MR to complete startup, and use the started MR to monitor the paging message.

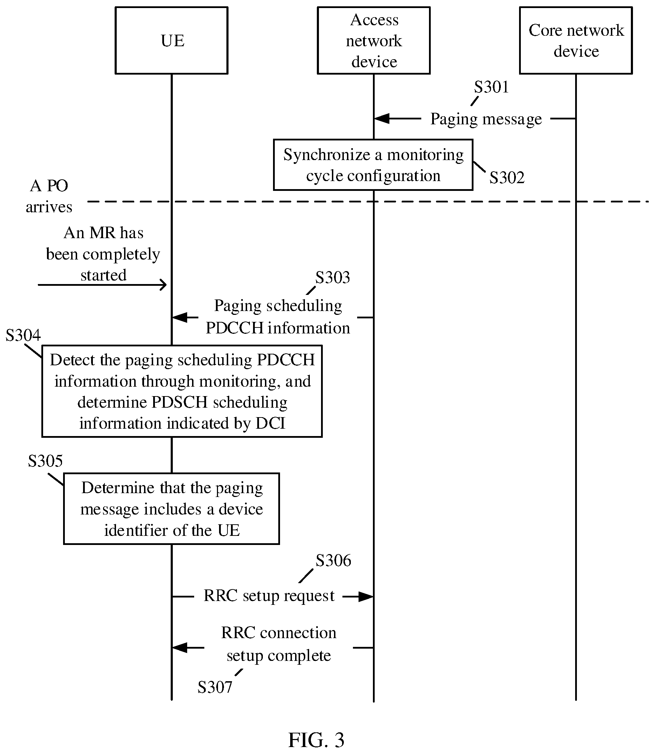

For example, FIG. 3 is a diagram of logical interaction of communication between devices according to an embodiment of this application.

As shown in FIG. 3, the process may include the following steps.

S301: A core network device sends a paging message to an access network device.

For example, the paging message may include a paging message. The paging message may indicate the access network device to page a UE.

In some embodiments, the paging message may include a monitoring cycle that has been configured by the core network device for the UE.

With reference to the example in FIG. 2, an example in which the core network device has configured a UE-specific DRX cycle for the UE is used. In this case, the paging message may include information about the UE-specific DRX configuration cycle.

An example in which the core network device has configured an eDRX cycle in an idle state for the UE is used. In this case, the paging message may include information about the eDRX cycle in the idle state.

The paging message may further carry a device identifier of the UE that needs to be paged.

S302: The access network device synchronizes a monitoring cycle configuration.

For example, the access network device may initiate paging to the UE based on the paging message.

Because paging monitoring of the UE is performed in the monitoring cycle, the access network device may synchronize the monitoring cycle configuration with the UE before initiating paging.

It may be understood that an example in which the UE is configured with four monitoring cycles shown in FIG. 2 is used.

In this way, the access network device can learn of a cell default DRX cycle and an inactive-state DRX or eDRX cycle that are configured by the access network device for the UE.

The access network device may further determine, based on the paging message from a core network, the UE-specific DRX cycle and the eDRX cycle in the idle state that are configured by the core network device for the UE.

Therefore, the access network device may implement synchronization with the monitoring cycle configuration of the UE based on the monitoring cycles that have been configured for the UE and a monitoring cycle selection policy that is the same as that of the UE.

For example, the access network device may select, as a paging cycle, a monitoring cycle with shortest duration in all monitoring cycles that have been configured for the UE.

In this way, the access network device may perform paging to the UE based on the paging cycle.

S303: The access network device sends paging scheduling PDCCH information to the UE.

For example, the access network device may send the paging scheduling PDCCH information to the UE when a PO corresponding to the paging cycle arrives.

In some embodiments, the paging scheduling PDCCH information may include downlink control information (Downlink Control Information, DCI).

The DCI may include PDSCH scheduling information. The PDSCH scheduling information may include, for the paging message sent by the access network device, the PDSCH time-frequency location..

S304: The UE detects the paging scheduling PDCCH information through monitoring, and determines the PDSCH scheduling information indicated by the DCI.

For example, the UE may start, based on the monitoring cycle autonomously determined by the UE, an MR to monitor the paging message.

After completing startup of the MR, the UE may monitor the paging scheduling PDCCH information through the MR.

In this way, the UE may determine, based on the paging scheduling PDCCH information, the PDSCH scheduling information indicated in the paging scheduling PDCCH information.

S305: The UE determines that the paging message includes the device identifier of the UE.

For example, the UE may determine, based on the PDSCH scheduling information, a time-frequency location of a device identifier of a device to be paged by the network.

Correspondingly, the UE may obtain, from the time-frequency location, the device identifier of the device to be paged by the network.

The UE may determine, based on the device identifier obtained through monitoring, including the device identifier of the UE, that a network side needs to communicate with the UE; and then, complete a paging process, and perform subsequent network access, to communicate with the network based on the accessed network.

S306: The UE sends an RRC setup request to the access network device. For example, the RRC setup request may include an RRC Connection Request.

S307: The access network device sends an RRC setup complete message to the UE. For example, the RRC setup complete message may include RRC Connection Setup Complete.

In this way, through S306 and S307, the UE may set up the connection to the access network device again. In view of this, the core network device may transmit downlink service data and information to the UE through the access network device, to implement a downlink service function.

In some other embodiments of this application, to distinguish between a paging message sent by the core network device to the access network device and a paging message sent in a process in which the access network device pages the UE, in descriptions of this application, the paging message sent by the core network device to the access network device may also be referred to as a paging indication, for example, a first paging indication. The paging message sent in the process in which the access network device pages the UE may include a first paging message and the like.

It should be noted that in the implementation of the solution shown in FIG. 3, an example in which the network side carries the device identifier of the to-be-paged UE in the paging message, so that the UE determines whether to access the network is used for description.

In some other implementations, the network and the UE may alternatively page the UE with reference to a device group identifier indicated by a PEI.

It may be understood that in the implementation of the solution shown in FIG. 3, if the UE needs to monitor the paging scheduling PDCCH information in time, the MR of the UE needs to be started relatively early.

For example, the UE may start the MR before the PO arrives.

However, in this way, although it can be ensured that the UE monitors the paging scheduling PDCCH information in time, high power consumption overheads are caused when the MR is in a wake-up state for long time to monitor paging information.

Therefore, an LR may be further configured in the UE. The LR may have low operating power consumption. The MR is started only when the UE can receive a WUS through the LR.

For example, before the access network device needs to initiate paging, the access network device may send the WUS to the UE in advance. Correspondingly, when the UE may receive the WUS through the LR, the UE may perform wake-up of the MR.

In this way, the UE can wake up the MR relatively early, and monitor the paging scheduling PDCCH information.

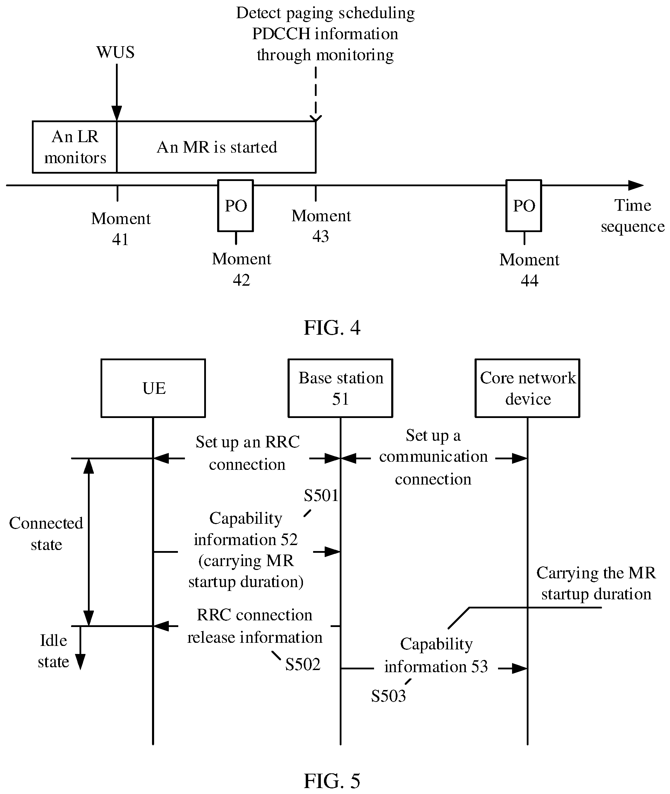

In an example, FIG. 4 is a diagram of time sequence comparison of operations performed by the UE.

In the example of FIG. 4, based on a selected monitoring cycle, a PO may arrive at a moment 42, and then at a moment 44.

The UE may start the LR and start monitoring the WUS before a moment 41. The UE may monitor the WUS at the moment 41, which is before the moment 42. Therefore, the UE may start the MR from the moment 41.

It may be understood that it takes time for the MR to switch from a sleep state to a wake-up state after completing startup. In the following example, the time required for switching the MR from the sleep state to the wake-up state is referred to as MR startup duration.

In this way, after the moment 41, the MR startup duration elapses; and at the moment 43 after the moment 42, the MR completes startup and enters the wake-up state. In this case, after the moment 43, the UE may monitor the paging scheduling PDCCH information through the MR. For example, at the moment 43, the UE detects, through monitoring, the paging scheduling PDCCH information through the MR.

With reference to the descriptions in FIG. 3, after detecting the paging scheduling PDCCH information through monitoring, the UE may complete network access through S304 to S307. In this way, after completing network access, the UE may receive, from the access network device, the downlink service data and information from the core network.

Still with reference to FIG. 4, in this example, after the WUS is received at the moment 41, the MR startup duration elapses and the moment 43 comes, the UE may complete startup of the MR and subsequent receiving of the paging scheduling PDCCH information in the monitoring cycle corresponding to the PO at the moment 42.

In this way, the UE may start to receive the downlink service data and information from the network in a monitoring cycle from the moment 42 to the moment 44. In addition, because of an LR monitoring mechanism, the MR is always in the sleep state before the moment 41, so that corresponding power consumption overheads can be reduced.

It should be noted that in a configuration of the LR monitoring mechanism, an example in which the MR startup duration is 400 ms or 800 ms is used.

In correspondence to a configuration mechanism of the monitoring cycle provided in FIG. 2, if the paging cycle of the UE/base station is short (for example, less than the MR startup duration), the UE starts the MR only after detecting the WUS through monitoring. As a result, startup of the MR cannot be completed in one monitoring cycle. In correspondence to the example shown in FIG. 4, in this scenario, the moment 43 at which the MR is started may be delayed until the moment 44 at which a next PO arrives.

With reference to descriptions of the time ranges of the monitoring cycles in FIG. 2, an example in which the MR startup duration is 800 ms is used. When the selected monitoring cycle is 320 ms, 640 ms, or the like, a problem that the MR startup duration is greater than the monitoring cycle may occur.

In this case, in the monitoring cycle between the moment 42 and the moment 44, the UE cannot monitor the paging scheduling PDCCH information through the started MR. This apparently causes a delay in subsequently setting up an RRC connection between the UE and the access network device, causing untimely reception of the downlink service data and information.

In this case, for the UE, if the MR is always in the wake-up state, the UE can detect the paging scheduling PDCCH information through monitoring earlier. Further, in the monitoring cycle between the moment 42 and the moment 44, access of the UE to the access network device is implemented. In this way, timely reception of the downlink service data and information can also be ensured.

In view of this, in the technical solution provided in this embodiment of this application, the UE and a network device (for example, the access network device) can flexibly determine whether to use the LR monitoring mechanism. Therefore, the UE can reasonably reduce power consumption based on the LR mechanism, and can avoid untimely reception of the downlink data and information caused by excessively long MR startup duration or an excessively short selected monitoring cycle.

The following describes in detail the solutions provided in embodiments of this application with reference to the accompanying drawings. The solution, as shown in FIG. 4, of receiving a WUS through an LR and waking up an MR to monitor a paging signal is an LP-WUS solution for short.

FIG. 5 is a diagram of an interaction procedure of a communication method according to an embodiment of this application. In this example, a base station 51 may be a 4G base station, a 5G base station, or a base station of another network standard. A core network device may be a core network device corresponding to the base station 51. As shown in FIG. 5, the solution may include the following steps.

S501: A UE sends capability information 52 to the base station 51. The capability information 52 may carry information about MR startup duration of the UE. In this embodiment of this application, the capability information 52 may be included in first capability information.

For example, the capability information 52 may include information about UECapabilityInformation.

Optionally, the capability information 52 may further carry a capability identifier indicating whether the UE supports an LP-WUS solution. For example, the capability identifier may be configured to indicate that the UE supports the LP-WUS solution, or the capability identifier may be configured to indicate that the UE does not support the LP-WUS solution.

In the following implementation, an example in which the UE supports the LP-WUS solution is used.

Optionally, before performing S501, the UE may further set up an RRC connection to the base station 51, and the base station 51 may also set up a communication connection to a core network device. In this way, the UE may register with the core network device through the RRC connection to the base station 51, thereby implementing communication and interaction between the UE and the core network device through the base station 51. In this process, the UE may be in a connected state.

Optionally, before the UE performs S501, the base station 51 may further send a UECapabilityEnquiry instruction to the UE, to indicate the UE to report the capability information. Correspondingly, the UE may send the capability information 52 to the base station 51.

S502: The base station 51 sends RRC connection release information to the UE.

For example, the RRC connection release information may include information about RRC Connection Release. The base station 51 may indicate, by using the RRC connection release information, the UE to disconnect the current RRC connection.

Correspondingly, after receiving the RRC connection release information, the UE may disconnect the RRC connection with the base station 51. In this example, the UE may be switched from a connected state to an idle state after the RRC connection to the base station 51 is disconnected.

S503: The base station 51 sends capability information 53 to the core network device. In this embodiment of this application, the capability information 53 may be included in second capability information.

For example, the base station 51 may forward the capability information 52 from the UE to the core network device.

For example, the base station 51 may generate the capability information 53 based on the received capability information 52. The capability information 53 may carry the information about the MR startup duration of the UE, obtained in S501.

In some embodiments, the base station 51 may send, to the core network device, the capability information 53 carrying the information about the MR startup duration of the UE and an identifier (for example, a device ID) of the UE together. In this way, the core network or device may store a correspondence between the device ID and the MR startup duration, to correctly maintain the UE and corresponding capability information.

Optionally, after the base station 51 disconnects the RRC connection with the UE, the base station 51 deletes the obtained capability information 52.

In this way, according to the solution shown in FIG. 5, when performing capability reporting, the UE may report the information about the MR startup duration to the base station, and then the base station reports the information to the core network device. The core network device (for example, an AMF in the core network device) may store the obtained correspondence between the device ID and the MR startup duration.

In view this, when the core network device needs to page the UE and provide a downlink service subsequently, the core network device may deliver the MR startup duration to the base station, so that the base station can flexibly select, based on the MR startup duration, whether to use the LP-WUS solution in cooperation with the UE.

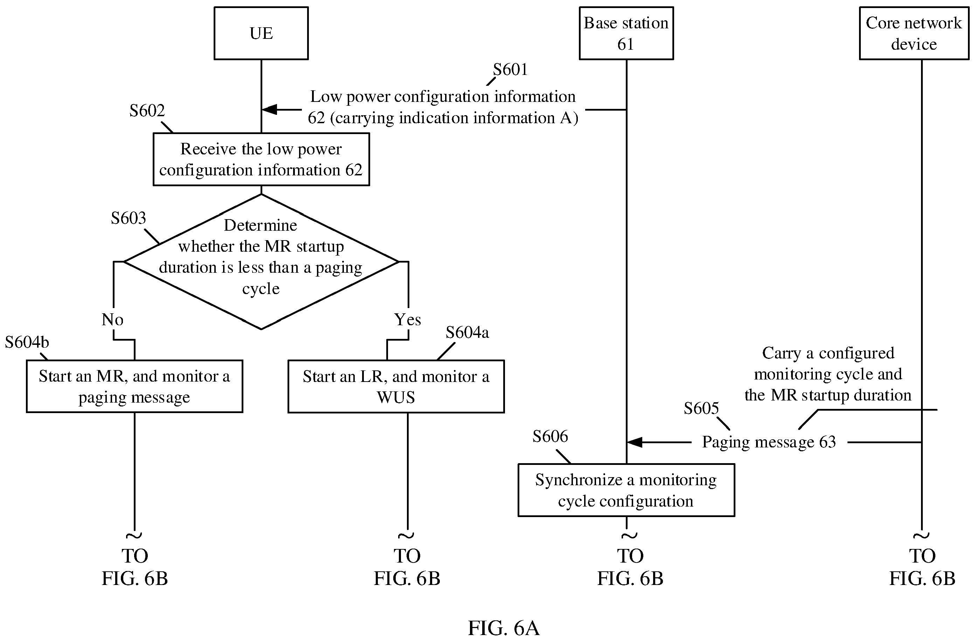

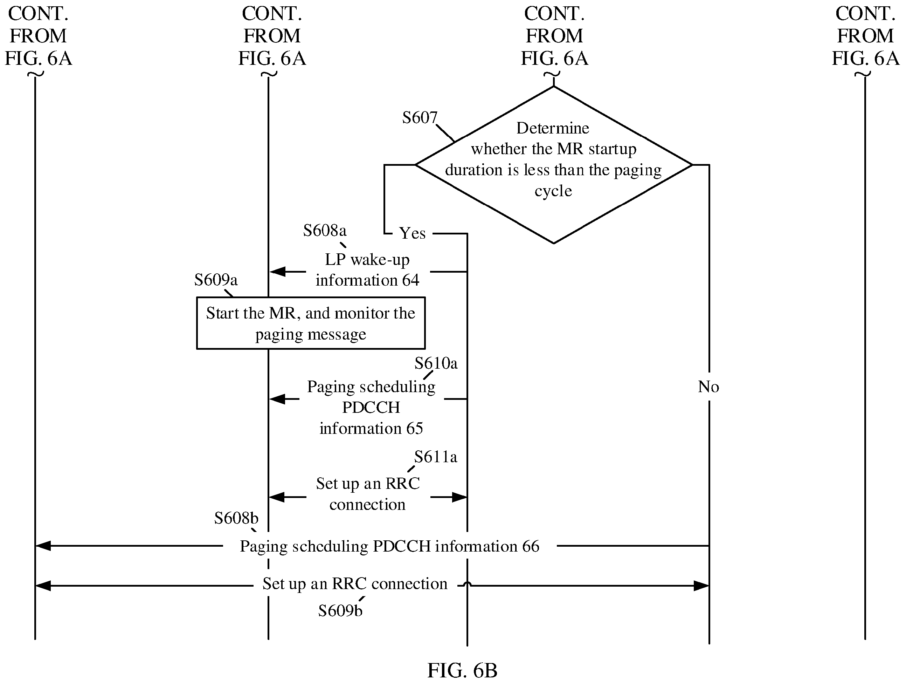

For example, FIG. 6A and FIG. 6B are a diagram of an interaction procedure of another communication method according to an embodiment of this application. As shown in FIG. 6A and FIG. 6B, the solution may include the following steps.

S601: A base station 61 sends low power configuration information 62 to a UE. In this embodiment of this application, the low power configuration information 62 may be included in first configuration information.

For example, the base station 61 may send, in a broadcast form, the low power configuration information 62 to all UEs within a cell coverage area of the base station 61. In this example, an example in which a current location of the UE is within the cell coverage area of the base station 61 is used.

It may be understood that the base station 61 and the base station 51 shown in FIG. 5 may be a same base station, or may be different base stations.

In some embodiments, the low power configuration information 62 may include indication information A. The indication information A may enable the UE to perform preset determining on an LP-WUS solution. A preset determining mechanism is described in detail subsequently.

It may be understood that in this embodiment of this application, "enable" may correspond to enable. Enabling a function of the UE may also correspond to turning on a switch corresponding to the function of the UE, so that the UE provides the function. In some embodiments, that the indication information A enables the UE to perform preset determining on the LP-WUS solution may correspond to a case in which the UE performs preset determining on the LP-WUS solution when receiving the indication information A.

In some embodiments, the indication information A may also be referred to as first indication information. The first indication information may be used to enable the UE to determine whether to monitor a WUS.

In some other embodiments, the low power configuration information 62 may further include LP-WUS configuration information. The LP-WUS configuration information may include at least one of the following: a time-frequency location corresponding to the WUS, coding information corresponding to the WUS, and a signal strength condition.

The time-frequency location corresponding to the WUS indicates a time-frequency location of the WUS in a sent data packet when the base station 61 sends the WUS. The coding information corresponding to the WUS indicates an encoding manner and a decoding manner of the WUS when the base station 61 sends the WUS.

The signal strength condition corresponds to a signal condition indicating that the LP-WUS solution can be executed.

For example, the signal strength condition may include a signal strength threshold. The UE may measure a current downlink communication channel when the signal strength condition is received. When signal strength of the current downlink communication channel obtained through measurement is greater than the strength threshold indicated by the signal strength condition, the UE may determine that the signal condition indicating that the LP-WUS solution can be executed is met.

S602: The UE receives the low power configuration information 62.

In some embodiments, an example in which the low power configuration information 62 includes the indication information A is used. The UE may trigger, based on the received indication information A, to perform the following S603.

In some embodiments, an example in which the low power configuration information 62 includes the signal strength condition is used. The UE may perform measurement on the corresponding downlink communication channel based on the received signal strength condition. Optionally, when the signal strength of the current downlink communication channel is greater than the strength threshold indicated by the signal strength condition, the UE may trigger to perform the following S603.

S603: The UE determines whether MR startup duration is less than a paging cycle. In this example, S603 may correspond to preset determining for the enabled LP-WUS solution corresponding to the indication information A in S601.

For example, before performing S603, the UE may determine the paging cycle based on one or more configured DRX cycles and/or eDRX cycles.

An example in which the UE is configured with a cell default DRX cycle, a UE-specific DRX cycle, an eDRX cycle in an idle state, and an inactive-state DRX or eDRX cycle is used. The configured one or more DRX cycles and/or eDRX cycles may include at least one of the following: a cell default DRX cycle, a UE-specific DRX cycle, an eDRX cycle in an idle state, and an inactive-state DRX or eDRX cycle.

The UE may use, as the paging cycle, a cycle with shortest duration in the configured DRX cycles or eDRX cycles.

For another example, the UE may determine the paging cycle according to a configured policy.

In this example, the UE may further perform subsequent processing based on whether the MR startup duration is less than the paging cycle.

For example, when the MR startup duration is less than the paging cycle, the UE may jump to perform S604a. When the MR startup duration is not less than (for example, greater than) the paging cycle, the UE may jump to perform S604b.

S604a: The UE starts an LR, and monitors the WUS.

For example, when the MR startup duration is less than the paging cycle, the UE may determine to use the LP-WUS solution to monitor the paging message. Therefore, according to the LP-WUS solution, power consumption overheads of the MR working in a wake-up state for long time are reduced.

In some embodiments, the UE may start the LR to start monitoring the WUS through the low power receiver.

Optionally, the UE may monitor the WUS based on information such as the time-frequency location corresponding to the WUS and the coding information corresponding to the WUS in the low power configuration information 62.

S604b: The UE starts the MR, and monitors the paging message.

For example, when the MR startup duration is not less than (for example, greater than) the paging cycle, the UE may directly use the MR to monitor the paging message without using the LP-WUS solution.

It may be understood that when the MR startup duration is not less than the paging cycle, it indicates that the MR startup duration is short, and the UE is time sensitive in the process of monitoring the paging message. In this way, the UE may directly start the MR, to complete startup of the MR startup as soon as possible, and receive the paging message sent by the base station in time.

S605: The core network device sends a paging message 63 to the base station 61. The paging message 63 may be included in a first paging indication.

In some embodiments, the paging message 63 may carry the MR startup duration of the UE.

In some other embodiments, the paging message 63 may also carry a DRX cycle or an eDRX cycle that has been configured by the core network device for the UE. For example, the paging message 63 may include a UE-specific DRX cycle and/or an eDRX cycle in an idle state that have/has been configured by the core network device for the UE.

S606: The base station 61 synchronizes a paging cycle configuration.

For example, the base station 61 may determine, by using a same policy as the UE, the paging cycle from the one or more DRX cycles and/or eDRX cycles that have been configured for the UE. The configured one or more DRX cycles and/or eDRX cycles may include at least one of the following: a cell default DRX cycle, a UE-specific DRX cycle, an eDRX cycle in an idle state, and an inactive-state DRX or eDRX cycle.

For example, the base station 61 may determine a DRX cycle or an eDRX cycle that has been configured for the UE with shortest duration as the paging cycle. For another example, the UE may determine the paging cycle according to a configured policy.

S607: The base station 61 determines whether the MR startup duration is less than the paging cycle.

For example, the base station 61 may determine, by using a processing mechanism similar to S603 in the UE, whether the MR startup duration is less than the paging cycle. In view of this, the base station 61 may trigger subsequent processing based on a determining result.

In some embodiments, the base station 61 may page the UE by using the LP-WUS solution when the MR startup duration is less than the paging cycle. For example, the base station 61 may perform S608a.

In some embodiments, the base station 61 may directly page the UE without using the LP-WUS solution when the MR startup duration is not less than (for example, equal to or greater than) the paging cycle. For example, the base station 61 may perform S608b.

Descriptions are separately provided below. An example in which the MR startup duration is less than the paging cycle is used. The solution may further include S608a to S611a.

S608a: The base station 61 sends LP wake-up information 64 to the UE.

For example, the LP wake-up information 64 may include WUS information. The LP wake-up information 64 may indicate the UE to start the MR.

S609a: The UE starts the MR, and monitors the paging message.

For example, the UE may determine, through the LR based on the WUS included in the received LP wake-up information 64, that the paging message is about to arrive. Correspondingly, the UE may start the MR, so that after completing startup, the MR receives the paging message from the access network device.

S610a: The base station 61 sends paging scheduling PDCCH information 65 to the UE.

For example, the paging scheduling PDCCH information 65 may be sent by the base station 61 to the UE as a part of the paging message sent by the access network device to the UE. In some embodiments, the paging scheduling PDCCH information 65 may be included in a first paging message.

With reference to the foregoing descriptions, the paging scheduling PDCCH information 65 may include DCI information, indicating a time-frequency location of a PDSCH in a data packet.

The corresponding UE may determine, based on the PDSCH indicated by the PDCCH information 65, whether the PDSCH includes a device ID of the UE.

An example in which the PDSCH indicated by the PDCCH information 65 carries the device ID of the UE is used. The UE may determine that the core network device has a requirement of sending downlink service data or information to the UE. In this way, the UE may perform the following S611a to access the network.

S611a: The UE sets up an RRC connection to the base station 61.

Therefore, the UE may be switched from an idle state to a connected state. In this way, the UE may obtain, through the base station 61, the downlink service data or information delivered by the core network device, thereby successfully completing paging of the UE.

For example, for the specific implementation of S611a, refer to S306 and S307 in FIG. 3. Details are not described herein.

In this way, when both the UE and the base station 61 determine that the LP-WUS solution can be used, the base station 61 and the UE may use the LP-WUS solution to reduce power consumption overheads caused by long-term wake-up of the MR while successfully implementing paging of the UE.

In some other embodiments, an example in which the MR startup duration is not less than the paging cycle is used. The solution may further include S608b and S609b.

S608b: The base station 61 sends paging scheduling PDCCH information 66 to the UE. With reference to the foregoing descriptions about sending the paging message to the UE by the access network device, in this example, the paging scheduling PDCCH message 66 may be included in the first paging message.

S609b: The UE sets up an RRC connection to the base station 61.

For example, for an execution process of S608b and S609b, refer to descriptions of S303 to S307 in FIG. 3. For specific implementations of the two, refer to each other.

It may be understood that, when the UE and the base station 61 determine not to use the LP-WUS solution, the base station 61 may directly initiate paging to the UE. Correspondingly, because the MR of the UE is in the wake-up state, the UE may receive the paging message sent by the base station 61 in time, thereby avoiding a delay of a downlink service caused by excessively short MR startup time when the LP-WUS solution is used.

FIG. 5 and FIG. 6A and FIG. 6B provide an implementation of embodiments of this application. FIG. 6A and FIG. 6B are described by using an example in which the base station 61 carries the indication information A in the low power configuration information 62, and the preset determining includes determining whether the MR startup duration is less than the paging cycle.

In some other embodiments, the low power configuration information configured by the access network device for the UE may further carry other information, and corresponding preset determining may also be implemented in another manner.

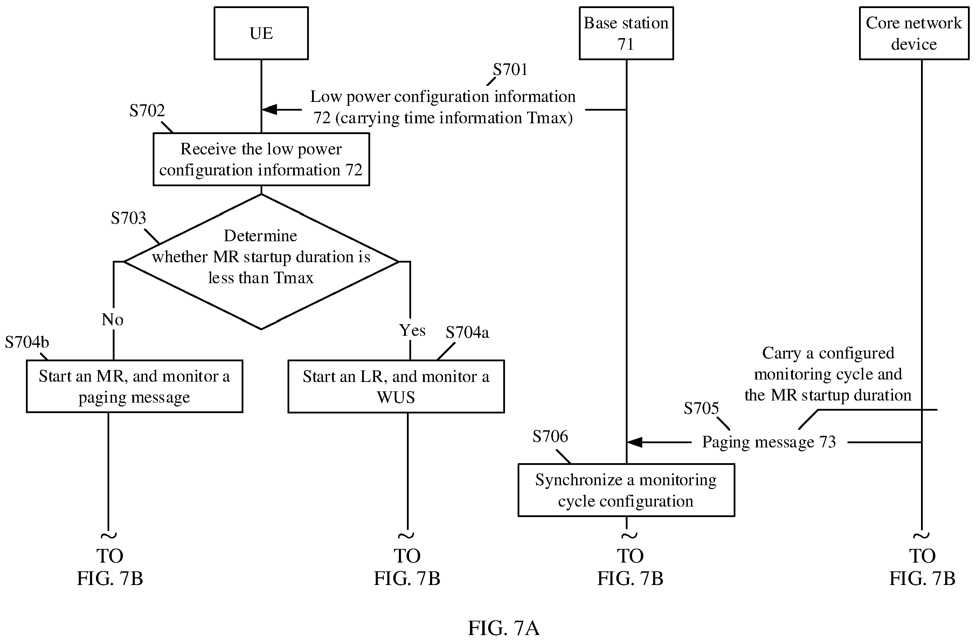

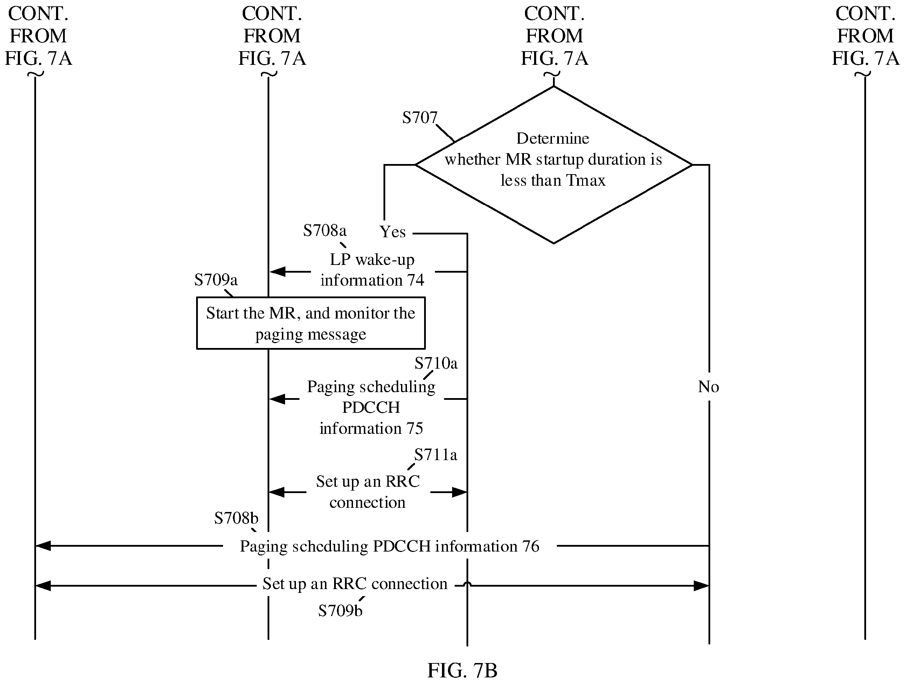

For example, FIG. 7A and FIG. 7B are a diagram of an interaction procedure of another communication method according to an embodiment of this application. In the solution shown in FIG. 7A and FIG. 7B, the UE has reported the MR startup duration to the network in the manner shown in FIG. 5. An example in which the corresponding core network device also stores the MR startup duration of the UE is used.

As shown in FIG. 7A and FIG. 7B, the solution may include the following steps.

S701: A base station 71 sends low power configuration information 72 to a UE. In some embodiments, the low power configuration information 72 may be included in first configuration information.

For example, the base station 71 may send, in a broadcast form, the low power configuration information 72 to all UEs within a cell coverage area of the base station 71. The base station 71 and the base station 51 shown in FIG. 5 or the base station 61 shown in FIG. 6A and FIG. 6B may be a same base station, or may be different base stations.

In some embodiments, the low power configuration information 72 may include time information Tmax. The time information Tmax may indicate maximum MR startup duration that is supported by a network and can use an LP-WUS. The time information Tmax may be preconfigured in the base station 71. The time information Tmax may correspond to first time information.

In some other embodiments, the low power configuration information 72 may further include LP-WUS configuration information. The LP-WUS configuration information may include at least one of the following: a time-frequency location corresponding to the WUS, coding information corresponding to the WUS, and a signal strength condition. For descriptions of this part, refer to the descriptions of the low power configuration information 62 in S601.

S702: The UE receives the low power configuration information 72. For execution of this process, refer to S602 in FIG. 6A and FIG. 6B.

In some embodiments, after receiving the low power configuration information 72, the UE may directly perform S703. In some other embodiments, after receiving the low power configuration information 72, when determining that a signal strength condition is met (where for example, signal strength of a downlink communication channel is greater than a strength threshold), the UE may perform S703.

S703: The UE determines whether the MR startup duration is less than Tmax. In this example, S703 may correspond to preset determining on the LP-WUS solution in this example.

For example, the UE may perform subsequent processing based on a magnitude relationship between the MR startup duration and Tmax.

For example, when the MR startup duration is less than Tmax, the UE may jump to perform S704a. When the MR startup duration is not less than (for example, greater than) the paging cycle, the UE may jump to perform S704b.

S704a: The UE starts an LR, and monitors the WUS.

For example, when the MR startup duration is less than Tmax, the UE may determine to use the LP-WUS solution to monitor the paging message. Therefore, according to the LP-WUS solution, power consumption overheads of the MR working in a wake-up state for long time are reduced.

S704b: The UE starts the MR, and monitors the paging message.

For example, when the MR startup duration is not less than (for example, greater than) Tmax, the UE may directly use the MR to monitor the paging message without using the LP-WUS solution.

In this way, the UE may flexibly determine, based on preset determining, in combination with the MR startup duration of the UE and a capability of the network supporting the LP-WUS solution, whether to use the LP-WUS solution to perform paging monitoring.

In view of this, the network and the UE may further implement paging of the UE in different mechanisms by using subsequent solutions.

S705: The core network device sends a paging message 73 to the base station 71. For execution of this process, refer to S605 in FIG. 6A and FIG. 6B. The paging message 73 may correspond to the paging message 63 in S605.

S706: The base station 71 synchronizes a paging cycle configuration. For execution of this process, refer to S606 in FIG. 6A and FIG. 6B.

S707: The base station 71 determines whether the MR startup duration is less than Tmax. It may be understood that the base station 71 may receive the paging message 73 from the core network device through S705. The paging message 73 may include the MR startup duration of the UE.

In this way, similar to the preset determining mechanism in the UE in S703, the base station 71 may also perform similar determining, to be consistent with the UE.

The base station 71 may page the UE by using the LP-WUS solution when the MR startup duration is less than Tmax. For example, the base station 71 may perform S708a.

In some embodiments, the base station 71 may directly page the UE without using the LP-WUS solution when the MR startup duration is not less than (for example, equal to or greater than) Tmax. For example, the base station 71 may perform S708b.

An example in which the MR startup duration is less than Tmax is used.

S708a: The base station 71 sends LP wake-up information 74 to the UE.

S709a: The UE starts the MR, and monitors the paging message.

S710a: The base station 71 sends paging scheduling PDCCH information 75 to the UE.

S711a: The UE sets up an RRC connection to the base station 71.

For example, for an execution process of the S708a to S711a, refer to the execution process of S608a to S611a in FIG. 6A and FIG. 6B. In view of this, the UE and the network can use the LP-WUS solution to smoothly implement UE paging and reduce power consumption overheads caused by long-term wake-up of the MR.

An example in which the MR startup duration is not less than Tmax is used. The solution may further include the following steps.

S708b: The base station 71 sends paging scheduling PDCCH information 76 to the UE.

S709b: The UE sets up an RRC connection to the base station 71.

For example, for an execution process of the S708b and S709b, refer to the execution process of S608b and S609b in FIG. 6A and FIG. 6B. In view of this, the UE and the network can directly perform paging monitoring through the MR without using the LP-WUS solution, thereby avoiding a delay of a downlink service caused by excessively short MR startup time when the LP-WUS solution is used.

It may be understood that in the foregoing embodiment of this application, based on the mechanism in which the UE actively reports the MR startup duration shown in FIG. 5, the network can learn of the MR startup duration of the UE.

According to the solutions in FIG. 6A and FIG. 6B and FIG. 7A and FIG. 7B, two different preset determining mechanisms are respectively provided, so that the UE and the network can reasonably and flexibly select the LP-WUS solution or direct MR monitoring to perform the paging process of the UE.

In addition, the descriptions in FIG. 6A and FIG. 6B and FIG. 7A and FIG. 7B both provide a possible implementation mechanism as follows: When the low power configuration information includes the signal strength condition, and the signal strength of the current downlink communication channel is greater than the strength threshold indicated by the signal strength condition, the UE may trigger subsequent related steps of performing paging signal monitoring by using the LP-WUS solution.

In subsequent embodiments, an example in which the signal strength of the current downlink communication channel meets the signal condition strength condition is used. Details are not described again.

In the implementation of the foregoing solution, as shown in FIG. 5, after the UE reports, by using the capability information, the MR startup duration, the UE may disconnect the RRC connection with the access network device, and then enter the idle state. When the UE enters the idle state, the access network device may release related information (for example, the capability information) of the UE whose RRC connection has been disconnected. In this way, to ensure that the capability information such as the MR startup duration can be learned of by a network side (for example, the core network), as shown in FIG. 5, the access network device may transmit the capability information including the MR startup duration to the core network device (for example, an AMF) for storage. Correspondingly, in the implementation of the solution in FIG. 6A and FIG. 6B or FIG. 7A and FIG. 7B, when delivering the paging message, the core network device may also send, to the access network device, the MR startup duration of the UE that needs to be paged. In this way, the access network device can also learn of the MR startup duration of the UE, thereby supporting preset determining on the network side in FIG. 6A and FIG. 6B or FIG. 7A and FIG. 7B.

In some other implementations, the UE may enter the inactive state after reporting the MR startup duration and receiving the RRC connection release information of the base station. In this case, the access network device may continue to reserve various pieces of information reported by the UE, for example, the MR startup duration. For this scenario, an embodiment of this application further provides a communication method, so that the UE and the network can reasonably and flexibly select whether to page the UE by using the LP-WUS solution.

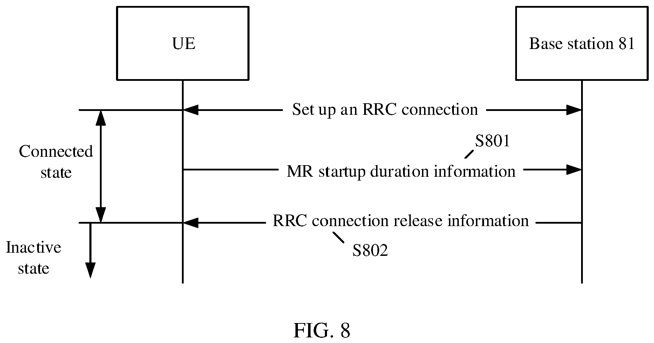

For example, FIG. 8 is a diagram of an interaction procedure of another communication method according to an embodiment of this application. As shown in FIG. 8, the solution may include the following steps.

S801: A UE sends information about MR startup duration to a base station 81. The information about the MR startup duration may be included in first capability information.

Similar to the descriptions in S501 in FIG. 5, in this example, before performing S801, the UE may set up an RRC connection to the base station 81. In this way, when the UE is in a connected state, the UE may perform S801.

For example, in some embodiments, the UE may send, to the base station 81 in a form of reporting capability information, the information about the MR startup duration. For example, the UE may send, to the base station 81, UECapabilityInformation information carrying the information about the MR startup duration.

Optionally, before sending UECapabilityInformation to the base station, the UE may receive an UECapabilityEnquiry instruction from the base station 81. In response to the UECapabilityEnquiry instruction, the UE may send, to the base station 81, UECapabilityInformation carrying the MR startup duration.

In some other embodiments, the UE may also send, to the base station 81 in a form of reporting assistance information, the information about the MR startup duration. For example, after receiving an RRC Reconfiguration sent by the base station 81, the UE may send, to the base station 81, UE assistance information (UE Assistance Information, UAI) carrying the MR startup duration.

In this way, an access network device can learn of the MR startup duration of the UE.

S802: The base station 81 sends RRC connection release information to the UE.

In some embodiments, the RRC connection release information may include LP-WUS configuration information. The LP-WUS configuration information may include at least one of the following: a time-frequency location for sending a WUS, coding information, and a signal strength condition.

For descriptions of the time-frequency location for sending the WUS, the coding information, and the signal strength condition, refer to the example in S601.

In some other embodiments, the RRC connection release information may further include a DRX cycle or an eDRX cycle when the UE is in an inactive state.

In this example, the UE is about to be switched from the connected state to the inactive state. Therefore, the base station 81 may configure the UE with the DRX cycle or the eDRX cycle in the inactive state, so that the UE can monitor a paging message based on the DRX cycle or the eDRX cycle in the inactive state and another configured DRX or eDRX cycle.

With reference to the example in FIG. 5, in the example in FIG. 8, after receiving the RRC connection release information, the UE may be switched to the inactive state. The corresponding access network device (for example, the base station 81) does not delete related information (for example, the MR startup duration) of the UE. Therefore, the base station 81 may autonomously store the MR startup duration of the UE, and does not need to report the capability information or the assistance information of the UE, for example, the MR startup duration, to the core network for storage.

With reference to the example in FIG. 6A and FIG. 6B or FIG. 7A and FIG. 7B, in some embodiments of this application, after the UE is switched to the inactive state, the UE and the network may determine, in the manner shown in FIG. 6A and FIG. 6B or FIG. 7A and FIG. 7B, whether to page the UE according to the LP-WUS solution.

For example, after the UE enters the inactive state, the UE and the network may determine, in the manner shown in FIG. 6A and FIG. 6B, whether to page the UE according to the LP-WUS solution.

The access network device (for example, the base station 81) may send, to the UE in a broadcast form, low power configuration information that carries indication information A. Correspondingly, the UE may determine, based on the indication information A, whether the MR startup duration is less than the paging cycle. The UE may further start an MR as shown in S604a based on a determining result, and directly monitor the paging message without using the LP-WUS solution; or use the LP-WUS as shown in S604b based on the determining result, and start an LR to monitor the WUS. In addition, after receiving the paging message from a core network device, the base station 81 may also use, based on the solution shown in S605 to S611a or S605 to S609b shown in FIG. 6A and FIG. 6B, a solution consistent with that of the UE (for example, use or not use the LP-WUS solution), to page the UE and access the network.

In some other embodiments, after the UE enters the inactive state, the UE and the network may also determine, in the manner shown in FIG. 7A and FIG. 7B, whether to page the UE based on the LP-WUS solution, to implement proper access of the UE. For specific implementation, refer to the descriptions in FIG. 7A and FIG. 7B. Details are not described herein.

It may be understood that in the implementation of the solution provided in FIG. 6A and FIG. 6B or FIG. 7A and FIG. 7B, the access network device may send the low power configuration information to the UE in a broadcast form, to indicate the UE to determine whether to use the LP-WUS solution based on whether the MR startup duration is less than the paging cycle, or whether the MR startup duration is less than Tmax.

It should be noted that in some other embodiments of this application, based on implementation of the solution shown in FIG. 8, when performing S802, that is, sending the RRC connection release information to the UE, the base station 81 may also send the low power configuration information to the UE by using the RRC connection release information.

For example, in this example, the RRC connection release information sent by the base station 81 to the UE may include at least one of the following: a time-frequency location for sending the WUS, coding information, and a signal strength condition; a DRX cycle or an eDRX cycle when the UE is in the inactive state; and low power configuration information 82.

The low power configuration information 82 may include any one of the following:
indication information A and time information Tmax.

For example, when the UE sends the RRC connection release information, the low power configuration information 82 carried includes the indication information A.

In this way, the UE may be switched to the inactive state based on the received RRC connection release information. The UE may further perform the S603 and S604a or the S603 and S604b shown in FIG. 6A and FIG. 6B according to the indication information A. Correspondingly, after the base station 81 receives the paging message from the core network device, the base station 81 and the UE may separately refer to S605 to S611a or S605 to S609b in FIG. 6A and FIG. 6B, to page the UE and access the network.

For example, when the UE sends the RRC connection release information, the low power configuration information 82 carried includes the time information Tmax.

In this way, the UE may be switched to the inactive state based on the received RRC connection release information. The UE may further perform S703 and S704a or S703 and S704b shown in FIG. 7A and FIG. 7B based on the time information Tmax. Correspondingly, after the base station 81 receives the paging message from the core network device, the base station 81 and the UE may separately refer to S705 to S711a or S705 to S709b in FIG. 7A and FIG. 7B to page the UE and access the network.

In this way, in the implementation and description of the solution shown in FIG. 8, the UE and the network can reasonably and flexibly determine whether to use the LP-WUS solution to page the UE when the UE is in the inactive state.

In some other embodiments of this application, a communication method is further provided, so that the UE and the network can reasonably and flexibly determine whether to use the LP-WUS solution to page the UE. Based on this solution, the UE does not need to report the MR startup duration to the network. The network and the UE may separately determine, by configuring time information Tmin (or referred to as second time information), whether the LP-WUS solution is required for paging the UE.

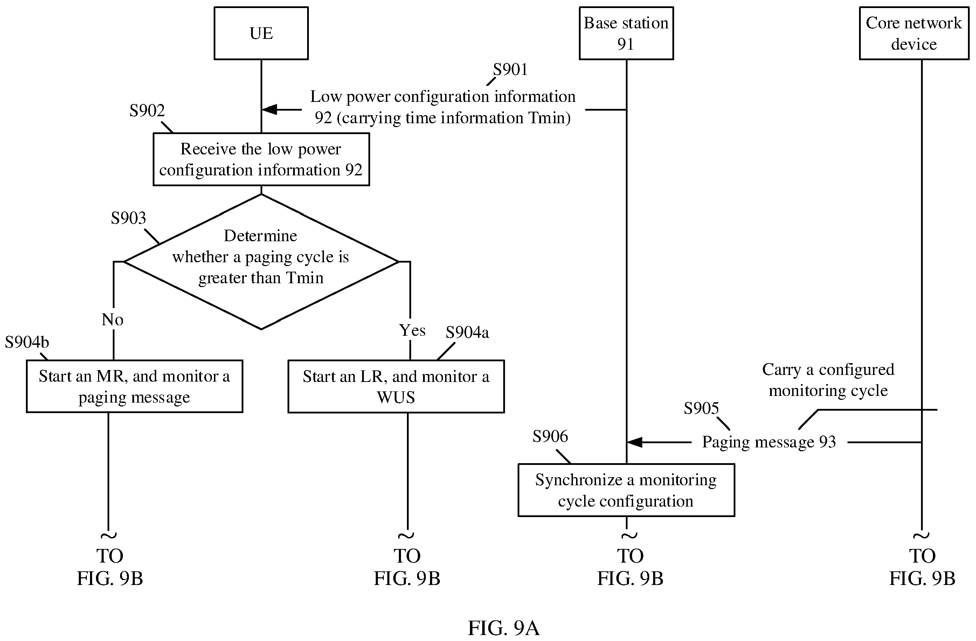

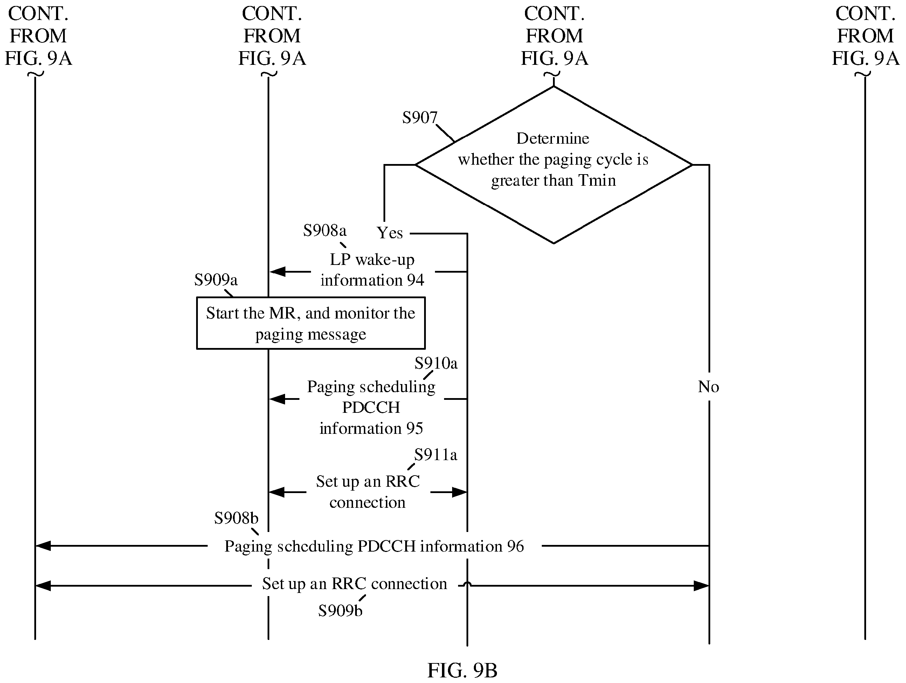

For example, FIG. 9A and FIG. 9B are a diagram of an interaction procedure of another communication method according to an embodiment of this application. As shown in FIG. 9A and FIG. 9B, the solution may include the following steps.

S901: A base station 91 sends low power configuration information 92 to a UE. In some embodiments, the low power configuration information 92 may be included in first configuration information.

For example, the base station 91 may send, in a broadcast form, the low power configuration information 92 to all UEs within a cell coverage area of the base station 91. In this example, an example in which a current location of the UE is within the cell coverage area of the base station 91 is used.

In some other embodiments, the low power configuration information 92 may also be transmitted to the UE in another manner. For example, the base station 91 sends the low power configuration information 92 to the UE by using RRC connection release information.

In some embodiments, the low power configuration information 92 may include time information Tmin. The time information Tmin may be preconfigured in the base station 91; or the time information Tmin may be configured by a core network device for the base station 91. The time information Tmin may indicate a minimum paging cycle in which the UE performs paging monitoring by using an LP-WUS solution.

In some other embodiments, the low power configuration information 92 may further include at least one of the following: a time-frequency location corresponding to a WUS, coding information corresponding to the WUS, and a signal strength condition.

The time-frequency location corresponding to the WUS indicates a time-frequency location of the WUS in a sent data packet when the base station 91 sends the WUS. The coding information corresponding to the WUS indicates an encoding manner and a decoding manner of the WUS when the base station 91 sends the WUS.

Similar to the descriptions in FIG. 6A and FIG. 6B, the signal strength condition corresponds to a signal condition indicating that the LP-WUS solution can be executed.

For example, the signal strength condition may include a signal strength threshold. The UE may measure a current downlink communication channel when the signal strength condition is received. When signal strength of the current downlink communication channel obtained through measurement is greater than the strength threshold indicated by the signal strength condition, the UE may determine that the signal condition indicating that the LP-WUS solution can be executed is met.

S902: The UE receives the low power configuration information 92.

In some embodiments, an example in which the low power configuration information 92 includes the time information Tmin is used. The UE may trigger, based on the received time information Tmin, to perform the following S903.

In some embodiments, an example in which the low power configuration information 92 includes the signal strength condition is used. The UE may perform measurement on the corresponding downlink communication channel based on the received signal strength condition. Optionally, when the signal strength of the current downlink communication channel is greater than the strength threshold indicated by the signal strength condition, the UE may trigger to perform the following S903.

S903: The UE determines whether the paging cycle is greater than Tmin.

For example, before performing S903, the UE may determine the paging cycle based on one or more configured DRX cycles and/or eDRX cycles.

In some embodiments, the UE may use, as the paging cycle, a cycle with shortest duration in the configured DRX cycles or eDRX cycles. The configured one or more DRX cycles and/or eDRX cycles may include at least one of the following: a cell default DRX cycle, a UE-specific DRX cycle, an eDRX cycle in an idle state, and an inactive-state DRX or eDRX cycle.

In some other embodiments, the UE may determine the paging cycle according to a configured policy.

In this example, the UE may further perform subsequent processing based on whether the paging cycle is greater than Tmin.

For example, when the paging cycle is greater than Tmin, the UE may jump to perform S904a. When the paging cycle is not greater than (for example, less than or equal to) Tmin, the UE may jump to perform S904b.

S904a: The UE starts an LR, and monitors the WUS.

For example, when the paging cycle is greater than Tmin, the UE may determine to use the LP-WUS solution to monitor the paging message. Therefore, according to the LP-WUS solution, power consumption overheads of the MR working in a wake-up state for long time are reduced.

In some embodiments, the UE may start the LR to start monitoring the WUS through the low power receiver.

Optionally, the UE may monitor the WUS based on information such as the time-frequency location corresponding to the WUS and the coding information corresponding to the WUS in the low power configuration information 92.

S904b: The UE starts the MR, and monitors the paging message.

For example, when the paging cycle is not greater than (for example, less than or equal to) Tmin, the UE may directly use the MR to monitor the paging message without using the LP-WUS solution.

It may be understood that when the MR startup duration is not less than the paging cycle, it indicates that the MR startup duration is short, and the UE is time sensitive in the process of monitoring the paging message. In this way, the UE may directly start the MR, to complete startup of the MR startup as soon as possible, and receive the paging message sent by the base station in time.

S905: The core network device sends a paging message 93 to the base station 91.

In some embodiments, the paging message 93 may also carry a DRX cycle or an eDRX cycle that has been configured by the core network device for the UE. For example, the paging message 93 may include a UE-specific DRX cycle and/or an eDRX cycle in an idle state that have/has been configured by the core network device for the UE.

S906: The base station 91 synchronizes a paging cycle configuration.

For example, the base station 91 may determine, by using a same policy as the UE, the paging cycle from the one or more DRX cycles and/or eDRX cycles that have been configured for the UE. The configured one or more DRX cycles and/or eDRX cycles may include at least one of the following: a cell default DRX cycle, a UE-specific DRX cycle, an eDRX cycle in an idle state, and an inactive-state DRX or eDRX cycle.

For example, the base station 91 may determine a DRX cycle or an eDRX cycle that has been configured for the UE with shortest duration as the paging cycle. For another example, the UE may determine the paging cycle according to a configured policy.

S907: The base station 91 determines whether the paging cycle is greater than Tmin.

For example, the base station 91 may determine, by using a processing mechanism similar to S903 in the UE, whether the paging cycle is greater than Tmin. In view of this, the base station 91 may trigger subsequent processing based on a determining result.

In some embodiments, the base station 91 may page the UE by using the LP-WUS solution when the paging cycle is greater than Tmin. For example, the base station 91 may perform S908a.

In some embodiments, the base station 91 may directly page the UE without using the LP-WUS solution when the paging cycle is not greater than (for example, less than or equal to) Tmin. For example, the base station 91 may perform S908b.

Descriptions are separately provided below. An example in which the paging cycle is greater than Tmin is used. The solution may further include S908a to S911a.

S908a: The base station 91 sends LP wake-up information 94 to the UE.

For example, the LP wake-up information 94 may include WUS information. The LP wake-up information 94 may indicate the UE to start the MR.

S909a: The UE starts the MR, and monitors the paging message.

For example, the UE may determine, through the LR based on the WUS included in the received LP wake-up information 94, that the paging message is about to arrive. Correspondingly, the UE may start the MR, so that after completing startup, the MR receives the paging message (for example, paging scheduling PDCCH information) from the access network device.

S910a: The base station 91 sends paging scheduling PDCCH information 95 to the UE.

For example, the paging scheduling PDCCH information 95 may be sent by the base station 91 to the UE as a part of the paging message sent by the access network device to the UE.

With reference to the foregoing descriptions, the paging scheduling PDCCH information 95 may include DCI information, indicating a time-frequency location of a PDSCH in a data packet.

Correspondingly, the UE may determine, based on the PDSCH indicated by the PDCCH information 95, whether the PDSCH includes a device ID of the UE.

An example in which the PDSCH indicated by the PDCCH information 95 carries the device ID of the UE is used. The UE may determine that the core network device has a requirement of sending downlink service data or information to the UE. In this way, the UE may perform the following S911a to access the network.

S911a: The UE sets up an RRC connection to the base station 91.

Therefore, the UE may be switched to a connected state and continue working. In this way, the UE may obtain, through the base station 91, the downlink service data or information delivered by the core network device, thereby successfully completing paging of the UE.

For example, for the specific implementation of S911a, refer to S306 and S307 in FIG. 3. Details are not described herein.

In this way, when both the UE and the base station 91 determine that the LP-WUS solution can be used, the base station 91 and the UE may use the LP-WUS solution to reduce power consumption overheads caused by long-term wake-up of the MR while successfully implementing paging of the UE.

In some other embodiments, an example in which the paging cycle is not greater than (for example, less than or equal to) Tmin is used. The solution may further include S908b and S909b.

S908b: The base station 91 sends paging scheduling PDCCH information 96 to the UE.

S909b: The UE sets up an RRC connection to the base station 91.

For example, for an execution process of S908b and S909b, refer to descriptions of S303 to S307 in FIG. 3. For specific implementations of the two, refer to each other.

It should be noted that in the implementation of the solution shown in FIG. 9A and FIG. 9B, the base station 91 may be the same as any base station provided in the foregoing embodiments, or may be different from any base station provided in any of the foregoing embodiments.

Therefore, based on the implementation of the solution shown in FIG. 9A and FIG. 9B, for example, descriptions of the solution related to FIG. 6A and FIG. 6B, FIG. 7A and FIG. 7B, or FIG. 8, the UE may not need to expose the MR startup duration to the network. In the implementation of the solution, the UE is also not limited to being in the idle state or the inactive state.

In the implementation of the solution shown in FIG. 9A and FIG. 9B, the UE and the network side may separately reasonably and flexibly determine, based on the time information Tmin and the monitoring cycle (namely, the paging cycle) actually selected by the UE, whether the LP-WUS solution needs to be used to page the UE.

In the foregoing embodiments, the UE and the network may both determine, based on the preset determining, whether the LP-WUS solution needs to be used.

The preset determining may include: determining, as shown in FIG. 6A and FIG. 6B, of whether the MR startup duration is less than the paging cycle, or determining, as shown in FIG. 7A and FIG. 7B, of whether the MR startup duration is less than Tmax, or determining, as shown in FIG. 9A and FIG. 9B, of whether the paging cycle is greater than Tmin.

In some other embodiments of this application, after determining whether the LP-WUS solution needs to be used, the network may notify the UE in a form of indication information, so that the UE performs paging monitoring based on the received indication information correspondingly according to the LP-WUS solution, or directly starts the MR to perform paging monitoring.

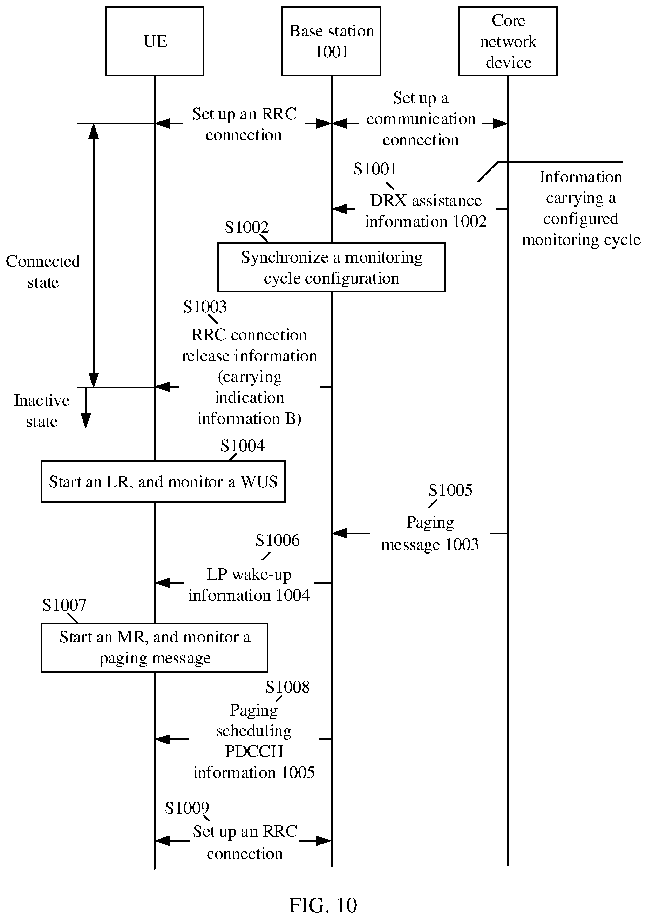

For example, FIG. 10 is a diagram of an interaction procedure of a communication method according to an embodiment of this application. As shown in FIG. 10, the solution may include the following steps.

S1001: A core network device sends DRX assistance information 1002 to a base station 1001. In this embodiment of this application, the DRX assistance information 1002 may be included in first DRX assistance information.

For example, the DRX assistance information 1002 may include information about a monitoring cycle that has been configured by a core network device (for example, an AMF) for a UE. The information about the monitoring cycle that has been configured for the UE may include: a UE-specific DRX cycle and/or an eDRX cycle in an idle state.

In some embodiments, the AMF may send, to the base station 1001, INITIAL CONTEXT SETUP REQUEST carrying the DRX assistance information 1002.

In some embodiments, before S1001, the UE has accessed a network through the base station 1001. For example, the UE sets up an RRC connection to the base station 1001. For another example, the base station 1001 sets up a communication connection to the core network device (for example, the AMF). In this way, the UE may register with the core network device through the base station 1001, to access the network.

S1002: The base station 1001 synchronizes a monitoring cycle configuration.

For example, the process of synchronizing the monitoring cycle configuration may include: The base station 1001 may determine a paging cycle based on the monitoring cycle that has been configured for the UE.

It may be understood that the monitoring cycle that has been configured for the UE may include: a monitoring cycle configured by the core network device for the UE (for example, a UE-specific DRX cycle and/or an eDRX cycle in an idle state), and/or a monitoring cycle configured by the access network device for the UE (for example, a cell default DRX cycle and/or an inactive-state DRX or eDRX cycle).

In some embodiments, the base station 1001 may select, as the paging cycle, a monitoring cycle with shortest duration in all monitoring cycles that have been configured. In some other embodiments, the base station 1001 may determine the paging cycle according to a configured policy.

S1003: The base station 1001 sends RRC connection release information to the UE. The RRC connection release information may carry indication information B. In some embodiments, the indication information B may be included in first configuration information.

For example, the base station 1001 may determine, based on the paging cycle, whether an LP-WUS solution needs to be used to page the UE. The base station 1001 may further send the indication information B to the UE when determining to use the LP-WUS solution to page the UE. The indication information B indicates the UE to monitor the paging message by using the LP-WUS solution.

In this example, an example in which the UE is switched from a connected state to an inactive state based on the RRC connection release information delivered by the base station 1001 is used. In this way, the base station 1001 may carry the indication information B in the RRC connection release information, so that the UE can learn that after entering the inactive state, the UE monitors the paging message by using the LP-WUS solution.

It should be noted that in different implementations, specific implementations of the indication information B may be different.

In some implementations, the indication information B may correspond to a preset first field. For example, when the first field is configured as a first value (for example, 1), it indicates that the LP-WUS solution is used. Therefore, the base station 1001 may configure the first field as the first value in the RRC connection release information.

In some other implementations, the indication information B may correspond to at least a part of information in LP-WUS configuration information. With reference to the foregoing descriptions, the LP-WUS configuration information may include at least one of the following: a time-frequency location corresponding to a WUS, coding information corresponding to the WUS, and a signal strength condition. Therefore, when determining to use the LP-WUS solution to page the UE, the base station 1001 may carry the LP-WUS configuration information in the RRC connection release information.

It may be understood that after receiving the RRC connection release information, the UE may be switched from the current connected state to the inactive state.

In addition, the UE may further determine, based on the indication information B carried in the received RRC connection release information, to perform paging monitoring by using the LP-WUS solution after entering the inactive state.

For example, the solution may include the following step.

S1004: The UE starts an LR, and monitors the WUS. In this way, the UE may start an MR when the LR subsequently receives the WUS.

Then, when receiving the paging message from the core network device, the base station 1001 may page the UE by using the LP-WUS solution. For example, the solution may include the following steps.

S1005: The core network device sends a paging message 1003 to the base station 1001.

S1006: The base station 1001 sends LP wake-up information 1004 to the UE.

S1007: The UE starts the MR, and monitors the paging message.

S1008: The base station 1001 sends paging scheduling PDCCH information 1005 to the UE.

S1009: The UE sets up an RRC connection to the base station 1001.

It may be understood that, for an execution process of S1005 to S1009, refer to the solution for paging the UE by using the LP-WUS solution in the foregoing embodiments. In the implementation of the solution shown in FIG. 10, because the base station 1001 has determined that paging needs to be performed by using the LP-WUS solution, after the base station 1001 receives the paging message 1003, steps such as determining the paging cycle and determining whether to use the LP-WUS solution do not need to be performed. Correspondingly, the base station 1001 may directly page the UE by using the LP-WUS solution.

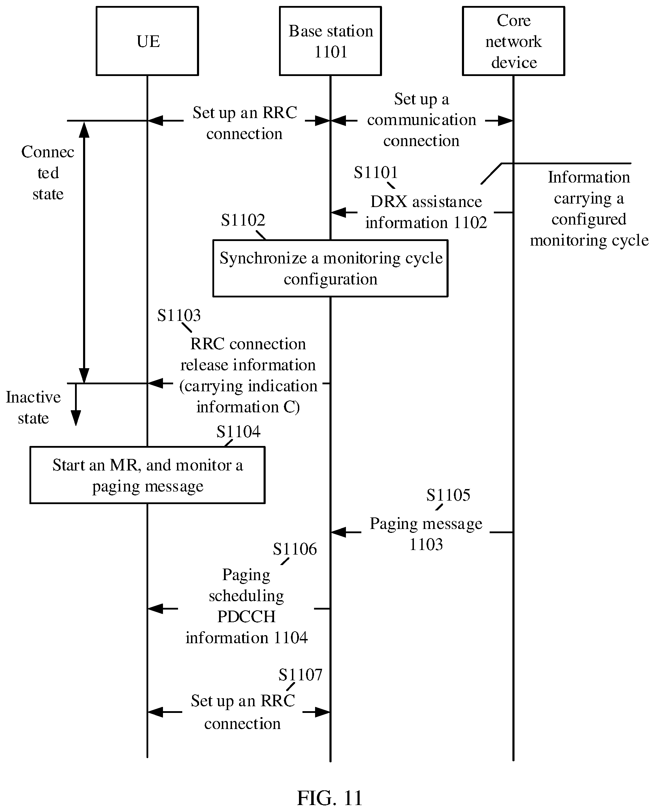

In the solution provided in FIG. 10, an example in which the base station 1001 determines that the LP-WUS solution needs to be used to page the UE is used. In some other embodiments, as shown in FIG. 11, the implementation of the solution in which the access network device determines not to use the LP-WUS solution to page the UE is provided.

For example, as shown in FIG. 11, the solution may include the following steps.

S1101: A core network device sends DRX assistance information 1102 to a base station 1101. In this embodiment of this application, the DRX assistance information 1102 may be included in first DRX assistance information.

S1102: The base station 1101 synchronizes a monitoring cycle configuration.

For execution of S1101 and S1102, refer to S1001 and S1002 in FIG. 10.

S1103: The base station 1101 sends RRC connection release information to a UE. The RRC connection release information may carry indication information C. The indication information C indicates that an LP-WUS solution is not used. In some embodiments, the indication information C may be included in first configuration information.

In this example, an example in which the UE is switched from a connected state to an inactive state based on the RRC connection release information delivered by the base station 1101 is still used.

In this way, the base station 1101 may carry the indication information C in the RRC connection release information, so that the UE may learn that after entering the inactive state, the UE does not use the LP-WUS solution to monitor the paging message.

With reference to the descriptions in S1003, in some implementations, the indication information C may correspond to a preset first field. For example, when the first field is configured as a second value (for example, 0), it indicates that the LP-WUS solution is not used. Therefore, the base station 1101 may configure the first field as the second value in the RRC connection release information.

In addition, in some other embodiments of this application, the function of carrying the indication information C in the RRC connection release information may alternatively be implemented in another manner.

For example, the base station 1101 may indicate the UE not to use the LP-WUS solution to perform paging monitoring by not carrying the LP-WUS configuration information in the RRC connection release information.

In the example shown in FIG. 11, after receiving the RRC connection release information, the UE may be switched from the current connected state to the inactive state.

In addition, the UE may further determine, based on the indication information C carried in the received RRC connection release information, that after entering the inactive state, the UE does not use the LP-WUS solution to perform paging monitoring. For example, the UE may directly perform paging monitoring through the MR.

For example, the solution may include the following steps.

S1104: The UE starts the MR, and monitors the paging message.

S1105: The core network device sends a paging message 1103 to the base station 1101.

S1106: The base station 1101 sends paging scheduling PDCCH information 1104 to the UE.

S1107: The UE sets up an RRC connection to the base station 1101.

It may be understood that for an execution process of S1104 to S1107, refer to the solution in which the UE paging is performed without using the LP-WUS solution in the foregoing embodiment. In the implementation of the solution shown in FIG. 11, because the base station 1101 has determined that paging does not need to be performed by using the LP-WUS solution, after the base station 1101 receives the paging message 1103, steps such as determining the paging cycle and determining whether to use the LP-WUS solution do not need to be performed. Correspondingly, the base station 1101 may directly send the paging message to the UE, to facilitate a subsequent RRC connection to the UE.

In the foregoing examples in FIG. 10 and FIG. 11, an example in which the UE is switched from the connected state to the inactive state to perform paging monitoring is used. In this way, the access network device may carry corresponding indication information in the RRC connection release information, to configure the UE to use the LP-WUS solution to perform paging monitoring, or configure the UE not to use the LP-WUS solution to perform paging monitoring.

In some other cases, the UE may enter the idle state from the connected state based on the received RRC connection release information. For this scenario, this embodiment of this application further provides a corresponding implementation of the solution, so that the access network device can also implement an indication to the UE when determining to use the LP-WUS solution or not to use the LP-WUS solution, so that both the access network device and the UE can perform subsequent paging based on a determining result of the access network device.

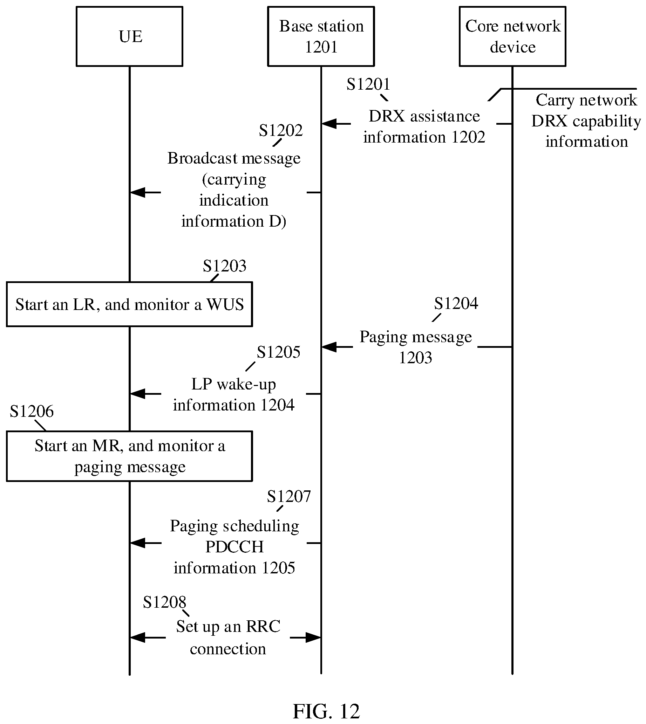

For example, FIG. 12 is a diagram of an interaction procedure of another communication method according to an embodiment of this application. As shown in FIG. 12, the solution may include the following steps.

S1201: A core network device sends DRX assistance information 1202 to a base station 1201. In this embodiment of this application, the DRX assistance information 1202 may be included in second DRX assistance information.

For example, the DRX assistance information 1202 may include network DRX capability information. In this example, the network DRX capability information may correspond to DRX capability information of the core network device, for example, DRX capability information of an AMF.

In some embodiments, the DRX assistance information 1202 may include: a minimum monitoring cycle supported by the AMF, and/or a maximum monitoring cycle supported by the AMF. The monitoring cycle supported by the AMF may include a UE-specific DRX cycle and/or an eDRX cycle in an idle state that are/is configured by the AMF for a UE.

In some other embodiments, the DRX assistance information 1202 may include: a minimum value of all monitoring cycles that have been configured by the core network device (for example, the AMF) for the UE, and/or a maximum value of all monitoring cycles that have been configured by the core network device (for example, the AMF) for the UE.

In some other embodiments, the DRX assistance information 1202 may include both: a minimum value and/or a maximum value of the monitoring cycle supported by the AMF, and a minimum value and/or a maximum value of all monitoring cycles that have been configured by the core network device (for example, the AMF) for the UE.

In the following example, an example in which the DRX assistance information 1202 includes the minimum value of the monitoring cycle supported by the AMF and/or the minimum value of all monitoring cycles that have been configured by the core network device (for example, the AMF) for the UE.

It may be understood that in different implementations, when the core network device configures the monitoring cycle for the UE, the monitoring cycle configured by the core network device for the UE is not less than the value of the monitoring cycle carried in the DRX assistance information 1202.

In some embodiments, the DRX assistance information 1202 may be carried in AMF CONFIGURATION UPDATE for sending. For example, the AMF may send, to the base station 1201 in an NG interface update procedure related to the UE, AMF CONFIGURATION UPDATE carrying the DRX assistance information 1202.

In some embodiments of this application, S1201 may be performed when the UE sets up an RRC connection to the base station 1201 and is in a connected state. In some other embodiments of this application, S1201 may also be performed after the UE enters an idle state.

Correspondingly, the base station 1201 may determine, based on the obtained DRX assistance information 1202, whether the LP-WUS solution needs to be used to page the UE.

In the example shown in FIG. 12, an example in which the base station 1201 determines, based on the minimum value of the monitoring cycle, supported by the AMF, carried in the obtained DRX assistance information 1202 and/or the minimum value of all monitoring cycles that have been configured by the core network device (for example, the AMF) for the UE, to use the LP-WUS solution to page the UE is used.

S1202: The base station 1201 sends a broadcast message to the UE. The broadcast message may carry indication information D. The indication information D may indicate the UE to perform paging monitoring by using the LP-WUS solution. For example, the indication information D may indicate the UE to monitor a WUS. In some embodiments, the indication information D may be included in first configuration information.

In this example, when the UE is in an idle state, the base station 1201 may send, to all UEs within a cell coverage area of the base station 1201 in a broadcast form, the broadcast message that carries the indication information D. In this example, an example in which a current location of the UE is within the cell coverage area of the base station 1201 is used.

With reference to the descriptions of the indication information B in FIG. 10, in this example, specific implementation of the indication information D may also have different forms.

In some implementations, the indication information D may correspond to a preset second field. For example, when the second field is configured as a first value (for example, 1), it indicates that the LP-WUS solution is used.

In some other implementations, the indication information D may correspond to at least a part of information in the LP-WUS configuration information. The LP-WUS configuration information may include at least one of the following: a time-frequency location corresponding to the WUS, coding information corresponding to the WUS, and a signal strength condition. Therefore, when determining to use the LP-WUS solution to page the UE, the base station 1201 may carry the LP-WUS configuration information in the broadcast message.

Therefore, the UE within the coverage area of the base station 1201 may obtain the indication information D by using the broadcast message. Correspondingly, the UE may determine, based on the received indication information D, to use the LP-WUS solution to perform paging monitoring.

For example, the solution may include the following step.

S1203: The UE starts an LR, and monitors the WUS. In this way, the UE may start an MR when the LR subsequently receives the WUS.

Then, when receiving the paging message from the core network device, the base station 1201 may page the UE by using the LP-WUS solution. For example, the solution may include the following steps.

S1204: The core network device sends a paging message 1203 to the base station 1301.

S1205: The base station 1201 sends LP wake-up information 1204 to the UE.

S1206: The UE starts the MR, and monitors the paging message.

S1207: The base station 1201 sends paging scheduling PDCCH information 1205 to the UE.

S1208: The UE sets up an RRC connection to the base station 1201.

It may be understood that, for an execution process of S1203 to S1208, refer to the solution for paging the UE by using the LP-WUS solution in the foregoing embodiments. For example, refer to the execution process of S1004 to S1009 in FIG. 10.

It should be noted that in some embodiments, before performing S1203, the UE may further perform S1203 when determining, based on the signal strength condition carried in the broadcast message, that the signal strength condition is met.

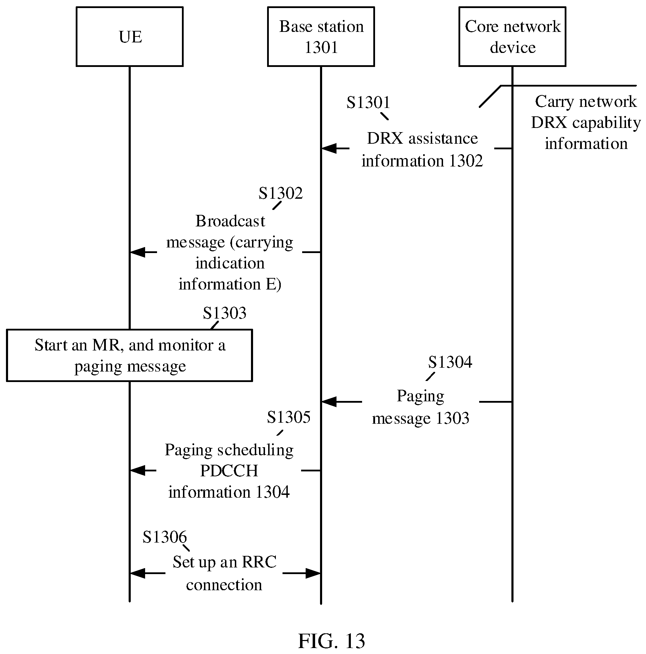

In the solution provided in FIG. 12, an example in which the base station 1201 determines that the LP-WUS solution needs to be used to page the UE is used. In some other embodiments, as shown in FIG. 13, the implementation of the solution in which the access network device determines not to use the LP-WUS solution to page the UE is provided.

For example, as shown in FIG. 13, the solution may include the following steps.

S1301: A core network device sends DRX assistance information 1302 to a base station 1301. In this embodiment of this application, the DRX assistance information 1302 may be included in second DRX assistance information.

For execution of S1301, refer to S1201 in FIG. 12.

S1302: The base station 1201 sends a broadcast message to a UE. The broadcast message may carry indication information E. The indication information E may indicate the UE not to use an LP-WUS solution to perform paging monitoring (that is, not to monitor a WUS). In some embodiments, the indication information E may be included in first configuration information.

With reference to the descriptions in FIG. 11, in some implementations of this example, that the broadcast message carries the indication information E may include as follows: In the broadcast message, the second field is configured as a second value. Therefore, when the second field is configured as the second value, it indicates that the LP-WUS solution is not used.

In some other implementations, the broadcast message may carry the indication information E by not carrying the LP-WUS configuration information in the broadcast message.

S1303: The UE starts the MR, and monitors the paging message.

In this way, the UE can monitor the paging message directly through the started MR without using the LP-WUS solution.

For example, the solution may further include the following steps.

S1304: The core network device sends a paging message 1303 to the base station 1301.

S1305: The base station 1301 sends paging scheduling PDCCH information 1304 to the UE.

S1306: The UE sets up an RRC connection to the base station 1301.

It may be understood that for an execution process of S1303 to S1306, refer to the solution in which the UE paging is performed without using the LP-WUS solution in the foregoing embodiment.

In this way, the solutions provided in FIG. 12 and FIG. 13 are implemented, so that when the UE enters the idle state from the connected state, the UE may monitor the paging message by using the LP-WUS solution based on an indication of the network (for example, the access network device), or monitor the paging message without using the LP-WUS solution.

The access network device may determine, based on the DRX assistance information (for example, the DRX assistance information 1202 or the DRX assistance information 1302) obtained from the core network device (for example, the AMF), whether to use the LP-WUS solution to page the UE.

It should be noted that with reference to FIG. 12 and FIG. 13, the base station configures, for the UE in the broadcast form, the implementation of whether to use the LP-WUS solution. In the implementation of the solution shown in FIG. 10 or FIG. 11, when the UE is switched from the connected state to the inactive state, the base station may also use the example shown in FIG. 12 or FIG. 13, to send, to the UE in the broadcast form, the related configuration of whether to use the LP-WUS solution.

Therefore, based on the detailed descriptions of the foregoing embodiments, the UE and the network device (for example, the access network device and/or the core network device) can reasonably and flexibly determine whether to use the LP-WUS solution to page the UE.

In some embodiments of this application, both the indication information B and the indication information D may indicate the UE to perform WUS monitoring. The indication information B and the indication information D may be the same, or may have different implementation forms. In some description forms, both the indication information B and the indication information D may be included in second indication information.

The indication information C is similar to the indication information E. In some description forms, both the indication information C and the indication information E may be included in third indication information, to indicate the UE not to monitor wake-up information or indicate the UE to monitor the paging message.

It may be understood that, to implement the functions, the electronic device provided in embodiments of this application includes corresponding hardware structure and/or software modules for executing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or computer software driving hardware depends on particular applications and design constraints of the technical solutions. A person skilled in the art may use different methods to implement the described functions for each particular application, but it should not be considered that the implementation goes beyond the scope of embodiments of this application.

In embodiments of this application, functional modules of the electronic device may be divided based on the foregoing method example. For example, each functional module may be divided based on each function, or two or more functions may be integrated into one processing module. The foregoing integrated module may be implemented in the form of hardware, or may be implemented in a form of a software functional module. It should be noted that in embodiments of this application, division into modules is an example, and is merely logical function division. During actual implementation, another division manner may be used.

For example, a software operating system may be configured in the terminal device (or the UE) involved in embodiments of this application, to support related functions of the UE in the foregoing embodiments.

In some embodiments, the operating system may use a layered architecture, an event-driven architecture, a microkernel architecture, a microservice architecture, or a cloud architecture. In embodiments of this application, an Android^{®} system of a layered architecture is used as an example to describe software and hardware structures of the terminal device. It should be noted that although the Android^{®} system is used as an example for description in this embodiment of this application, a basic principle of this application is also applicable to a terminal device based on an operating system such as iOS^{®} or Windows^{®}.

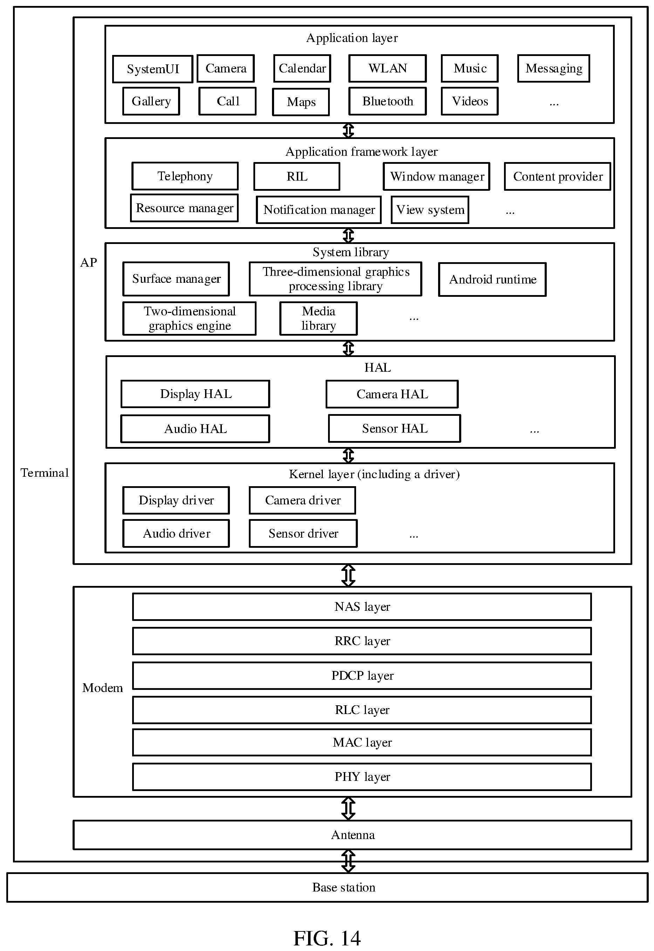

For example, FIG. 14 is a block diagram of a software structure of a terminal device according to an embodiment of this application. The software structure uses a layered architecture. In the layered architecture, software is divided into several layers, and each layer has a clear role and task. The layers communicate with each other through software interfaces. For example, an Android^{®} system runs on an AP. In some embodiments, the Android^{®} system is divided into five layers: an application layer, an application framework layer (Framework), an Android runtime (Android runtime) and system library, a hardware abstract layer (HAL), and a system kernel layer (Kernel).

The application layer may include a series of application packages. The application packages may include APPs such as Camera, Gallery, Calendar, Call, Map, WLAN, Bluetooth, Music, Videos, and Messaging. The application layer may further include systemUI (systemUI). systemUI is used to display an interface of the terminal device, for example, display a signal icon corresponding to a SIM card, and display a call interface. The application program framework layer provides an application programming interface (Application Programming Interface, API) and a programming framework for the application program at the application program layer. The application framework layer includes some predefined functions. For example, the application framework layer may include a window manager, a content provider, a view system, a phone manager, a resource manager, a notification manager, and the like. The phone manager is configured to provide a call function of the terminal device, for example, management of a call status (including answering, declining, or the like). The phone manager is represented by telephony in FIG. 14. The application framework layer may further include an RIL (Radio Interface Layer, radio interface layer), and the modem processor (Modem) may exchange information with the telephony through the RIL.

The Modem may include a NAS (Non-Access Stratum) layer, an RRC (radio resource control) layer, a packet data convergence protocol (Packet Data Convergence Protocol, PDCP) layer, a radio link control (Radio Link Control, RLC) layer, a medium access control layer (Medium Access Control Layer, MAC) layer, and a physical (Physical, PHY) layer. The foregoing layers may be software modules. The Modem may interact with a base station through an antenna.

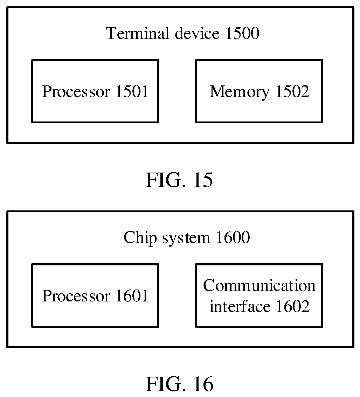

In addition, FIG. 15 is a composition diagram of a terminal device 1500 according to some embodiments of this application. The terminal device 1500 includes one or more processors 1501 and a memory 1502. The memory 1502 is configured to store computer program code. The computer program code includes computer instructions. When the one or more processors 1501 execute the computer instructions, the terminal device is enabled to perform the technical solution provided in any embodiment in the foregoing descriptions.

FIG. 16 is a composition diagram of a chip system 1600 according to some embodiments of this application. The chip system 1600 is applied to a terminal device, and the chip system 1600 includes at least one processor 1601 and a communication interface 1602. The communication interface 1602 is configured to receive instructions and transmit the instructions to the at least one processor 1601. The at least one processor 1601 runs the instructions, to enable the terminal device to perform the foregoing communication methods. The chip system may be a Modem, or may include a system on chip (System on Chip, Soc) of the Modem. The foregoing method may be implemented by one Modem.

In some other embodiments of this application, the chip system includes a processing circuit, a receiving pin, and a sending pin. The receiving pin, the sending pin, and the processing circuit communicate with each other through an internal connection path, and the processing circuit performs the foregoing communication method provided in any embodiment, to control the receiving pin to receive a signal and control the sending pin to send a signal.

In addition, an embodiment of this application provides a terminal device, and the terminal device has a function of implementing terminal device behavior in any one of the foregoing method embodiments. The function may be implemented by hardware, or may be implemented by hardware by executing corresponding software. The hardware or software includes one or more modules corresponding to various sub-functions in the above functions. Specifically, the terminal device may be user equipment, such as a mobile phone.

In addition, an embodiment of this application further provides an access network device. The access network device may be a base station. The access network device is configured to implement related functions of the base station in any one of the foregoing embodiments.

An embodiment of this application further provides a core network device. The core network device may include an AMF entity. The core network device is configured to implement related functions of the core network device in any one of the foregoing embodiments.

An embodiment of this application further provides a communication system. The system includes the network device (for example, an access network device or a core network device) and the terminal device described in any one of the foregoing embodiments.

An embodiment of this application further provides a computer-readable storage medium. The computer-readable storage medium stores a computer program. When the computer program is executed by a computer, a method procedure related to a terminal device, an access network device, or a core network device in any one of the foregoing method embodiments is implemented. Specifically, the computer may be the terminal device.

An embodiment of this application further provides a computer program or a computer program product including a computer program. When the computer program is executed on a computer, the computer is enabled to implement a method procedure related to a terminal device in any one of the foregoing method embodiments. Specifically, the computer may be the terminal device.

An embodiment of this application further provides a computer program or a computer program product including a computer program. When the computer program is executed on a computer, the computer is enabled to implement a method procedure related to a network device (for example, an access network device or a core network device) in any one of the foregoing method embodiments. Specifically, the computer may be the access network device (for example, a base station). Alternatively, the computer may be the core network device (for example, an AMF entity).

An embodiment of this application further provides an apparatus, used in a terminal device. The apparatus is coupled to a memory and configured to read and execute instructions stored in a memory, to enable the terminal device to perform a method procedure related to the terminal device in any one of the foregoing method embodiments. The memory may be integrated into a processor, or may be independent of the processor. The apparatus may be a chip on the terminal device. In some implementations, the chip may be a system on a chip (System on a Chip, SoC).

It should be understood that in embodiments of the present invention, the mentioned processor may be a central processing unit (Central Processing Unit, CPU), or the processor may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of an example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAMM, DR RAM).

Although this application is described with reference to specific features and embodiments, it is clear that various modifications and combinations may be made to this application without departing from the spirit and scope of this application. Correspondingly, this specification and the accompanying drawings are merely example descriptions of this application defined by the appended claims, and are considered as having covered any and all modifications, changes, combinations, or equivalents within the scope of this application. It is clear that, a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A communication method, wherein the method is applied to a terminal device; and
the method comprises:
receiving first configuration information, wherein the first configuration information is used by the terminal device to determine whether to monitor wake-up information WUS, and the wake-up information is used to wake up an MR of the terminal device; and
starting, based on the first configuration information, a low power receiver LR to monitor the wake-up information; or
starting, based on the first configuration information, the main receiver MR to monitor a paging message.

2. The method according to claim 1, wherein
the first configuration information comprises first indication information; and
the first indication information is used to enable the terminal device to determine whether to monitor the wake-up information; or
the first configuration information comprises first time information; and
the first time information is used by the terminal device to determine whether to monitor the wake-up information.

3. The method according to claim 2, wherein the first configuration information comprises the first indication information; and
the starting, based on the first configuration information, the LR to monitor the wake-up information comprises:
when MR startup duration is less than a paging cycle, starting the LR to monitor the wake-up information, wherein the paging cycle is determined based on at least one monitoring cycle configured for the terminal device.

4. The method according to claim 3, wherein
the starting, based on the first configuration information, the MR to monitor the paging message comprises:
when the MR startup duration is greater than the paging cycle, starting the MR to monitor the paging message.

5. The method according to claim 3 or 4, wherein the method further comprises:
determining the paging cycle from the at least one monitoring cycle configured for the terminal device, wherein
the at least one monitoring cycle configured for the terminal device comprises at least one of the following:
a cell default DRX cycle, a UE-specific DRX cycle, an eDRX cycle in an idle state, and an inactive-state DRX or eDRX cycle.

6. The method according to claim 2, wherein the first configuration information comprises the first time information, and the first time information indicates maximum MR startup duration that can be supported by a network when the MR of the terminal device is woken up by using the wake-up information; and
the starting, based on the first configuration information, the LR to monitor the wake-up information comprises:
when MR startup duration is less than the maximum MR startup duration, starting the LR to monitor the wake-up information.

7. The method according to claim 6, wherein
the starting, based on the first configuration information, the MR to monitor the paging message comprises:
when the MR startup duration is greater than the maximum MR startup duration, starting the MR to monitor the paging message.

8. The method according to any one of claims 2 to 7, wherein before the receiving the first configuration information, the method further comprises:
sending first capability information, wherein the first capability information comprises the MR startup duration.

9. The method according to claim 8, wherein after the sending the first capability information, the method further comprises:
receiving first RRC connection release information, wherein the first RRC connection release information comprises the first configuration information.

10. The method according to claim 9, wherein after receiving the first RRC connection release information, the terminal device is in an inactive state Inactive.

11. The method according to claim 8, wherein after the sending the first capability information, the method further comprises:
receiving a first broadcast message, wherein the first broadcast message comprises the first configuration information.

12. The method according to claim 11, wherein when receiving the first broadcast message, the terminal device is in an idle state IDLE.

13. The method according to claim 1, wherein
the first configuration information comprises second time information; and
the second time information indicates a minimum paging cycle that can be used by the terminal device when the LR is used to monitor the wake-up information.

14. The method according to claim 13, wherein
the starting, based on the first configuration information, the LR to monitor the wake-up information comprises:
when a paging cycle is greater than the minimum paging cycle, starting the LR to monitor wake-up information, wherein the paging cycle is determined based on at least one monitoring cycle configured for the terminal device.

15. The method according to claim 13, wherein
the starting, based on the first configuration information, the MR to monitor the paging message comprises:
when a paging cycle is less than the minimum paging cycle, starting the MR to monitor the paging message.

16. The method according to claim 14 or 15, wherein the method further comprises:
determining the paging cycle from the at least one monitoring cycle configured for the terminal device, wherein
the at least one monitoring cycle configured for the terminal device comprises at least one of the following:
a cell default DRX cycle, a UE-specific DRX cycle, an eDRX cycle in an idle state, and an inactive-state DRX or eDRX cycle.

17. The method according to any one of claims 13 to 16, wherein the receiving the first configuration information comprises:
receiving a first broadcast message, wherein the first broadcast message comprises the first configuration information; or
receiving first RRC connection release information, wherein the first RRC connection release information comprises the first configuration information.

18. The method according to any one of claims 1 to 17, wherein the first configuration information further comprises a signal strength condition; and
before the starting, based on the first configuration information, the LR to monitor the wake-up information, the method further comprises:
determining that signal strength of a downlink communication channel is greater than a signal strength threshold indicated by the signal strength condition, wherein the signal strength of the downlink communication channel is obtained through measurement after the terminal device receives the first configuration information.

19. A communication method, wherein the method is applied to an access network device, and the method comprises:
sending first configuration information, wherein the first configuration information is used by a terminal device to determine whether to monitor wake-up information WUS, and the wake-up information is used to wake up an MR of the terminal device;
starting, based on the first configuration information, a low power receiver LR to monitor the wake-up information; or
starting, based on the first configuration information, the main receiver MR to monitor a paging message; and
sending the wake-up information; or
sending a first paging message.

20. The method according to claim 19, wherein
the first configuration information comprises first indication information; and
the first indication information is used to enable the terminal device to determine whether to monitor the wake-up information; or
the first configuration information comprises first time information; and
the first time information is used by the terminal device to determine whether to monitor the wake-up information.

21. The method according to claim 20, wherein the first configuration information comprises the first indication information; and
the sending the wake-up information comprises:
when MR startup duration is less than a paging cycle, sending the wake-up information, wherein the paging cycle is determined based on at least one monitoring cycle configured for the terminal device.

22. The method according to claim 21, wherein the sending the first paging message comprises:
when the MR startup duration is greater than the paging cycle, sending the first paging message.

23. The method according to claim 21 or 22, wherein the method further comprises:
determining the paging cycle from the at least one monitoring cycle configured for the terminal device, wherein
the at least one monitoring cycle configured for the terminal device comprises at least one of the following:
a cell default DRX cycle, a UE-specific DRX cycle, an eDRX cycle in an idle state, and an inactive-state DRX or eDRX cycle.

24. The method according to claim 20, wherein the first configuration information comprises the first time information; and
the sending the wake-up information comprises:
when MR startup duration is less than maximum MR startup duration, sending the wake-up information.

25. The method according to claim 24, wherein the sending the first paging message comprises:
when the MR startup duration is greater than maximum MR startup duration, sending the first paging message.

26. The method according to any one of claims 19 to 25, wherein the wake-up information is not sent before the first paging message is sent.

27. The method according to any one of claims 19 to 26, wherein before the sending the wake-up information or the first paging message, the method further comprises:
receiving first capability information, wherein the first capability information comprises the MR startup duration;
sending first RRC connection release information; and
receiving a first paging indication from a core network device, wherein the first paging indication comprises the UE-specific DRX cycle and/or the eDRX cycle in the idle state that are/is configured by the core network device for the terminal device.

28. The method according to claim 27, wherein the first RRC connection release information comprises the first configuration information.

29. The method according to claim 27, wherein after the receiving the first capability information, the method further comprises:
sending second capability information to the core network device, wherein the second capability information comprises the MR startup duration.

30. The method according to claim 29, wherein the first paging indication further comprises the MR startup duration.

31. The method according to claim 29 or 30, wherein after the sending the first RRC connection release information, the method further comprises:
sending a first broadcast message, wherein the first broadcast message comprises the first configuration information.

32. The method according to claim 19, wherein
the first configuration information comprises second time information, and the second time information indicates a minimum paging cycle that can be used by the terminal device when the LR is used to monitor the wake-up information.

33. The method according to claim 32, wherein
the sending the wake-up information comprises:
when a paging cycle is greater than the minimum paging cycle, sending the wake-up information, wherein the paging cycle is determined based on at least one monitoring cycle configured for the terminal device.

34. The method according to claim 32, wherein
the sending the first paging message comprises:
when a paging cycle is less than the minimum paging cycle, sending the first paging message, wherein the paging cycle is determined based on at least one monitoring cycle configured for the terminal device.

35. The method according to claim 33 or 34, wherein the method further comprises:
determining the paging cycle from the at least one monitoring cycle configured for the terminal device, wherein
the at least one monitoring cycle configured for the terminal device comprises at least one of the following:
a cell default DRX cycle, a UE-specific DRX cycle, an eDRX cycle in an idle state, and an inactive-state DRX or eDRX cycle.

36. The method according to any one of claims 32 to 35, wherein the sending the first configuration information comprises:
sending a first broadcast message, wherein the first broadcast message comprises the first configuration information.

37. The method according to any one of claims 32 to 36, wherein before the sending the first configuration information, the method further comprises:
receiving a first paging indication from a core network device, wherein the first paging indication comprises the UE-specific DRX cycle and/or the eDRX cycle in the idle state that are/is configured by the core network device for the terminal device.

38. A communication method, wherein the method is applied to a terminal device; and
the method comprises:
receiving first configuration information, wherein the first configuration information comprises second indication information or third indication information; and
the second indication information indicates the terminal device to start a low power receiver LR to monitor wake-up information WUS, and the third indication information indicates the terminal device to start a main receiver MR; and
starting, based on the first configuration information, the LR to monitor the wake-up information; or
starting, based on the first configuration information, the MR to monitor a paging message.

39. The method according to claim 38, wherein the first configuration information comprises the second indication information; and
the starting, based on the first configuration information, the LR to monitor the wake-up information comprises:
starting the LR based on the received second indication information.

40. The method according to claim 38, wherein the first configuration information comprises the third indication information; and
the starting, based on the first configuration information, the MR to monitor the paging message comprises:
starting the MR based on the received third indication information.

41. The method according to any one of claims 38 to 40, wherein the receiving the first configuration information comprises:
receiving first RRC connection release information, wherein the first configuration information is carried in the first RRC connection release information.

42. The method according to claim 41, wherein after receiving the first RRC connection release information, the terminal device is in an inactive state inactive or an idle state IDLE.

43. The method according to any one of claims 38 to 40, wherein the receiving the first configuration information comprises:
receiving a first broadcast message, wherein the first broadcast message comprises the first configuration information.

44. The method according to claim 43, wherein when receiving the first broadcast message, the terminal device is in an inactive state inactive or an idle state IDLE.

45. The method according to any one of claims 38 to 44, wherein the first configuration information further comprises a signal strength condition; and
before the starting the LR to monitor the wake-up information, the method further comprises:
determining that signal strength of a downlink communication channel is greater than a signal strength threshold indicated by the signal strength condition, wherein the signal strength of the downlink communication channel is obtained through measurement after the terminal device receives the first configuration information.

46. A communication method, wherein the method is applied to an access network device, and the method comprises:
receiving first DRX assistance information, wherein the first DRX assistance information comprises a UE-specific DRX cycle and/or an eDRX cycle in an idle state that have/has been configured by a core network device for a terminal device; and
sending first configuration information, wherein the first configuration information comprises second indication information or third indication information; and
the second indication information indicates the terminal device to monitor wake-up information WUS; and the third indication information indicates the terminal device to not monitor the wake-up information, or the third indication information indicates the terminal device to monitor a paging message.

47. The method according to claim 46, wherein before the sending the first configuration information, the method further comprises:
determining, based on the first DRX assistance information, that the first configuration information comprises the second indication information or the third indication information.

48. The method according to claim 47, wherein the determining, based on the first DRX assistance information, that the first configuration information comprises the second indication information or the third indication information comprises:
determining a paging cycle from at least one monitoring cycle configured for the terminal device, wherein
the at least one monitoring cycle configured for the terminal device comprises at least one of the following:
a cell default DRX cycle, a UE-specific DRX cycle, an eDRX cycle in an idle state, and an inactive-state DRX or eDRX cycle; and
determining, based on the paging cycle, to carry the second indication information or the third indication information in the first configuration information.

49. The method according to any one of claims 46 to 48, wherein the first configuration information comprises the second indication information, and the method further comprises:
sending the wake-up information.

50. The method according to any one of claims 46 to 48, wherein the first configuration information comprises the third indication information, and the method further comprises:
sending a first paging message.

51. The method according to any one of claims 46 to 50, wherein
the sending the first configuration information comprises:
sending first RRC connection release information, wherein the first configuration information is carried in the first RRC connection release information; or
sending the first configuration information by using a broadcast message.

52. The method according to any one of claims 46 to 51, wherein the receiving the first DRX assistance information comprises:
receiving an INITIAL CONTEXT SETUP REQUEST message, wherein the INITIAL CONTEXT SETUP REQUEST message comprises the first DRX assistance information.

53. A communication method, wherein the method is applied to a core network device, and the method comprises:
sending first DRX assistance information, wherein the first DRX assistance information comprises a UE-specific DRX cycle and/or an eDRX cycle in an idle state that have/has been configured by the core network device for a terminal device.

54. The method according to claim 53, wherein before the sending the first DRX assistance information, the method further comprises:
setting up, by the core network device, a communication connection to the terminal device.

55. The method according to claim 53 or 54, wherein
the first DRX assistance information is used to determine, after the terminal device enters an inactive state inactive, whether to monitor wake-up information WUS.

56. The method according to any one of claims 53 to 55, wherein the sending the first DRX assistance information comprises:
sending the first DRX assistance information in an INITIAL CONTEXT SETUP REQUEST message.

57. A communication method, wherein the method is applied to an access network device, and the method comprises:
receiving second DRX assistance information, wherein the second DRX assistance information comprises a first monitoring cycle; and
the first monitoring cycle comprises at least one of the following:
a minimum value of a UE-specific DRX cycle and an eDRX cycle in an idle state that can be supported by a core network device; and a minimum value of a UE-specific DRX cycle and/or an eDRX cycle in an idle state that have/has been configured by the core network device for a terminal device; and
sending first configuration information, wherein the first configuration information comprises second indication information or third indication information; and
the second indication information indicates the terminal device to monitor wake-up information WUS; and the third indication information indicates the terminal device to not monitor the wake-up information, or the third indication information indicates the terminal device to monitor a paging message.

58. The method according to claim 57, wherein before the sending the first configuration information, the method further comprises:
determining, based on the first monitoring cycle comprised in the second DRX assistance information, that the first configuration information comprises the second indication information or the third indication information.

59. The method according to claim 57 or 58, wherein the first configuration information comprises the second indication information, and the method further comprises:
sending the wake-up information.

60. The method according to claim 57 or 58, wherein the first configuration information comprises the third indication information, and the method further comprises:
sending a first paging message.

61. The method according to any one of claims 57 to 60, wherein
the sending the first configuration information comprises:
sending first RRC connection release information, wherein the first configuration information is carried in the first RRC connection release information; or
sending the first configuration information by using a broadcast message.

62. The method according to any one of claims 57 to 61, wherein the receiving the second DRX assistance information comprises:
receiving an AMF CONFIGURATION UPDATE message, wherein the AMF CONFIGURATION UPDATE message comprises the second DRX assistance information.

63. A communication method, wherein the method is applied to a core network device, and the method comprises:
sending second DRX assistance information, wherein the second DRX assistance information comprises a first monitoring cycle; and
the first monitoring cycle comprises at least one of the following:
a minimum value of a UE-specific DRX cycle and an eDRX cycle in an idle state that can be supported by the core network device; and a minimum value of a UE-specific DRX cycle and/or an eDRX cycle in an idle state that have/has been configured by the core network device for a terminal device.

64. The method according to claim 63, wherein before the sending the second DRX assistance information, the method further comprises:
setting up, by the core network device, a communication connection to the terminal device.

65. The method according to claim 63 or 64, wherein
the second DRX assistance information is used to determine, after the terminal device enters an inactive state inactive or an idle state IDLE, whether to monitor wake-up information WUS.

66. The method according to any one of claims 63 to 65, wherein the sending the second DRX assistance information comprises:
sending the second DRX assistance information in an AMF CONFIGURATION UPDATE message.

67. A terminal device, wherein the terminal device is configured to perform the method according to any one of claims 1 to 18, or perform the method according to any one of claims 38 to 45.

68. A network device, wherein the network device is configured to perform the method according to any one of claims 19 to 37, or perform the method according to any one of claims 46 to 52, or perform the method according to any one of claims 57 to 62.

69. A network device, wherein the network device is configured to perform the method according to any one of claims 53 to 56, or perform the method according to any one of claims 63 to 66.
